# EUROPEAN PATENT APPLICATION

(11) **EP 2 034 731 A1**
(43) Date of publication of application: **11.03.2009**
(21) Application number: 07721217.3
(22) Date of filing: 21.05.2007
(51) Int. Cl.: H04N 7/173, H04L 12/56

(54) **MULTICAST SERVICE PROCESSING METHOD AND ACCESS EQUIPMENT**

(30) Priority: 09.06.2006 CN 200610035881; 20.07.2006 CN 200610098972; 24.07.2006 CN 200610103601; 15.08.2006 CN 200610111216
(71) Applicant: Huawei Technologies Co., Ltd., Longgang District Shenzhen 518129 (CN)
(72) Inventor: LI, Zhiqiang, Guangdong 518129 (CN); CHEN, Qin, Guangdong 518129 (CN); WANG, Deyi, Guangdong 518129 (CN); QIN, Peifeng, Guangdong 518129 (CN); LUO, Yong, Guangdong 518129 (CN); WAN, Xifeng, Guangdong 518129 (CN); WEI, Jiahong, Guangdong 518129 (CN); CHANG, Yue, Guangdong 518129 (CN); WU, Haijun, Guangdong 518129 (CN)
(74) Representative: Gulde Hengelhaupt Ziebig & Schneider
(86) International application number: PCT/CN2007/001644
(87) International publication number: WO 2007/140702

(57) **Abstract**

A multicast service processing method and access equipment are disclosed, wherein the method includes: receiving multicast program request message from terminal device, inquiring about program rating parameters according to said multicast program request message, wherein the program rating parameter includes multicast group IP address and multicast program rated priority, generating multicast program data according to the program rating parameters, then sending the multicast program data to the terminal device.

## Description

This application claims the benefits of Chinese Patent Application No. 200610035881.6, titled "Method and Device for Multicast Channel Control" and filed with the Chinese Patent Office on June 9, 2006, Chinese Patent Application No. 200610098972.4, titled "Method for Differential Processing of Program Channel in IPTV Bearer Network" and filed with the Chinese Patent Office on July 20, 2006, Chinese Patent Application No. 200610103601.0, titled "Method and Access Device for Rating-Based Control of Multicast Program" and filed with the Chinese Patent Office on July 24, 2006, and Chinese Patent Application No. 200610111216.0, titled "Multicast Service Processing Method and System" and filed with the Chinese Patent Office on August 15, 2006, all of which are hereby incorporated by reference in their entireties.

### Field of the Invention

The present invention relates to the field of data communication and in particular to a method, system and access device for processing multicast service.

### Background of the Invention

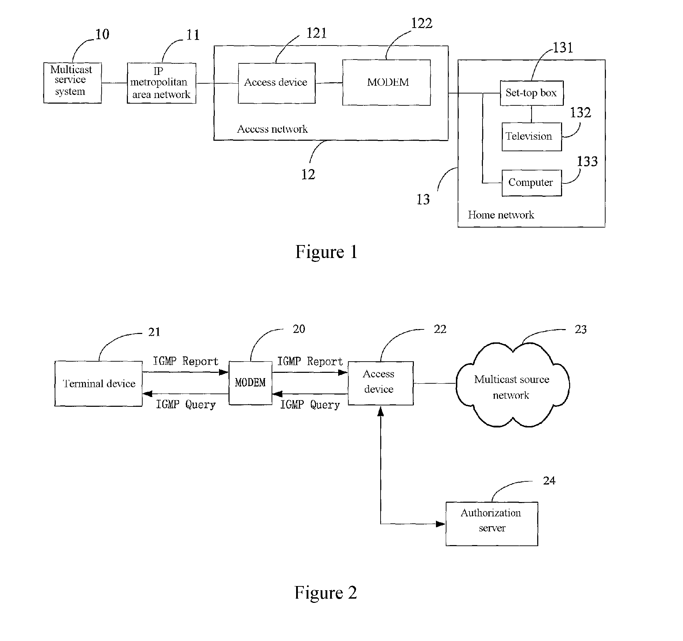

Multicasting is a point-to-multipoint network technology, the purpose of which it to reduce network load and the burden on media servers. Figure 1 is a structural diagram of a multicast system including four parts, which are a video multicast service system 10, an IP-based metropolitan area network (MAN) 11, an access network 12 and a home network 13. Particularly, the access network 12 includes an access device 121 and a modem 122, and the home network 13 includes a set-top box 131, a television set 132 and probably a computer 133. The multicast service system implements video user management, video capture system and video coding functions, and sends video traffic flow into the IP-based metropolitan area network which sends the video traffic flow to a broadband access network by IP multicast, and the access network implements control functions which enable video groups to be joined or quit and sends the video flow required by a user to the user.

With the developments of IP Television (IPTV), nowadays more and more broadband access networks are supporting Internet Group Management Protocol (IGMP) and multicast services according to IGMP. Compared with unicast, multicast can make effective use of network bandwidth, reduce network traffic and improve data transmission efficiency. Multicast technology has become a key supporting technology for a verity of network applications, e.g. multimedia teleconference, distance education, IPTV, real-time online broadcasting, online data distribution, distributed interoperation, etc.

The network structure of a system for implementing multicast service by IGMP protocol is illustrated as figure 2, including a terminal device 21, a modem 20, an access device 22, a multicast source network 23 and an authorization server 24. While joining a multicast group, which is often referred to as a channel, the terminal device 21 sends an IGMP report message to the access device 22 via the modem 20. Upon receiving the IGMP report message, the access device 22 adds the terminal device 20 to its multicast forwarding table and sends an IGMP report message to the multicast source network 23, multicast flow is therefore directed to the access device 22. After that the access device 22 forwards the multicast flow to a line where the terminal device 21 is in. Once a while, the access device 22 sends an IGMP query to check whether the terminal device 21 is still receiving the multicast flow, and the terminal device 21 must respond with an IGMP report message if it needs to be kept in the multicast group. A same process occurs between the multicast source network 23 and the access device 22 in order to maintain forwarding relation of the multicast flow.

As seen from the above procedure that a multicast terminal device joins a multicast group, while switching channels, the multicast terminal device sends two IGMP messages: one is a quitting message of the current channel, and the other is a joining message of a desired channel of the terminal device. Meanwhile, the permission of a program is added for the terminal device, which can be controlled at the access device or provided on the authorization server.

As specified in the IGMP protocol, upon receiving a quitting message from a multicast user of a port, the access device sends a specific group query message, and waits for a response from other possible users of the multicast group, so as to check whether there are other multicast users in the group of the network connected to the port. The port is removed from table entries of the multicast group only if it is determined that no other user is in the multicast group. Accordingly, a user's quitting may not interfere with other possible users in the same multicast group of the user.

However, a problem arises in the practice of IPTV service due to the time delay resulting from the above procedure of multicasting a specific group query message. In IPTV service implemented by multicast, the operations of a user switching channels include: sending an IGMP quitting message of an original channel and sending an IGMP joining message of a new channel. Upon receiving an IGMP quitting message, instead of breaking up the video flow instantly, the multicast access device sends a specific group query IGMP message, waits to see whether a user responds with an IGMP joining message, and decides whether to break up the video flow. While the multicast access device is awaiting the response message, the original channel may not be removed in time, which leads to concurrent transmission of old and new video flows and wastes a lot of bandwidth. For example, if a user fast scans multiple channels 1 to 10 sequentially, video flows of those ten channels are sent concurrently to a multicast service port of the multicast access device for a period of time, which may greatly exceed downlink bandwidth of the service port, resulting in loss or delay of message, and therefore quality of the user's video program may drop fast and even not be suitable for watching.

Because multicast performance of MAN is currently a bottleneck of multicast and a MAN may have tens of thousands of users, in order to provide all the users with an experience similar to traditional CATV (Cabled TV), a channel switching request of a single user has to be processed within 1 second and the process time of concurrent channel switching requests of all the users must not exceed 1 second. In other words, the maximum time allowed for video flow in an access device (except transmission and coding/decoding time of home devices and process time of MAN and multicast service systems) must not exceed 1 second.

In order to solve the delay problem in multicast processing, there is a solution in which all multicast programs are pushed to the access device. However, this solution may lead to a significant increase of fixed bandwidth occupied by multicast when there are a large number of multicast channels. For example in the case of 1000 multicast channels, each of which occupies a bandwidth of 5M on average, a fixed bandwidth of 20G is needed from an edge device to an access device in order to push multicast traffic. Apparently it is not acceptable in practice. Furthermore, because the access device deals with all IGMP messages on the user side and controlling messages sent to the network side, the access device has to process IGMP request messages of every user adding a program source at the same time, which involves a lot of repetitive work. When a large number of users switch video service channels, performance of the access device is not good enough. Further, as the number of programs on the MAN increases, and quality and data rate of the programs improve, bandwidth of the whole MAN can not support all the programs to be pushed to the access device.

Another situation also presents in practice: multiple multicast users may access the same service port. Therefore, in the prior art, fast quitting function is enabled at access devices for multiple multicast users at a same service port, a fast quitting time is also set. After a service port of an access device receives a multicast quitting message of a channel switching request from a multicast user, a specific group query message for the channel quitting request is sent to multicast users of the port, in order to determine whether there are other multicast users watching the channel. If no joining message of the channel sent from another multicast user is received in a defined fast quitting response time, no other user is watching the channel and multicast flow of the channel is cut immediately. If a joining message of the channel sent from another multicast user is received in the defined fast quitting response time, the multicast flow of the channel continues to be forwarded instead of being cut.

Fast quitting response time can be kept reasonable and sufficiently short by this solution. Therefore with the solution a quitting message of a multicast user can be cut in a period of time that is sufficiently short, thereby preventing bandwidth usage from being interfered because a channel requesting to be quit holds too much time, meanwhile ensuring the quitting multicast user not to interfere with other multicast users.

However the above solution may not be implemented well in a controlled multicast service application. In the controlled multicast service, the maximum number of multicast channels that can be selected of a service port needs to be controlled, which may lead to channel switching failure with the above solution. Assume that the maximum number of selected channels of a service port is two, and two multicast users of the service port select multicast channels A and B respectively, when a multicast user that selects channel A is to switch to channel C, the multicast user sends to the access device a quitting message of channel A and a joining message of channel C. Upon receiving the quitting message of multicast channel A sent by the multicast user, the access device issues a specific multicast query message of channel A to the port. Before fast quitting response time expires, two channels are being forwarded at the port. At this moment the access device receives a joining message of channel C, because the number of multicast channels concurrently online at the port reaches two now, the access device rejects the joining of channel C under the principle of controlled multicast, which results in a channel switching failure. Of course, if the multicast user sends the joining message of channel C after the fast quitting response time expires, his selection succeeds. That is, in order to switch to a desired multicast channel C, the multicast user has to wait for the fast quitting response time to expire, if the number of multicast channels being forwarded reaches the maximum number of multicast channels allowed to be accessed at the port. Such a time delay of channel switching is undesirable and even unacceptable to multicast users.

### Summary of the Invention

An aspect of embodiments of the present invention provides a multicast service processing method and system, to reduce time delay of channel switching in IPTV service and improve quality of service.

Another aspect of embodiments of the present invention provides an access device, to improve processing ability of the access device, reduce time delay of channel switching in IPTV service and improve quality of service.

A multicast service processing method according to an embodiment of the present invention includes: receiving, by an access device, a multicast program request message from a terminal device; inquiring and obtaining a program rating parameter according to the multicast program request message; generating multicast program data according to the program rating parameter; and sending the multicast program data to the terminal device.

The multicast service processing method according to the embodiment adds a new parameter, i.e. multicast program rated priority information, to multicast program rating parameters of the prior art, to further subdivide the rating of multicast programs and improve quality of service.

An access device according to an embodiment of the invention includes an IGMP message processing unit, a router joining and quitting message unit. The access device further includes a multicast program management unit, adapted to configure and manage a rating form and a rated priority of a multicast program, generate multicast program data according to the rating form and the rated priority after the IGMP message processing unit receives a multicast program request message of a terminal device, and send the multicast program data to the router joining and quitting message unit.

The access device according to the embodiment configures and manages a rating form and a rated priority of a multicast program, and generates multicast program data according to the rating form and the rated priority upon receiving a multicast program request message of the terminal device, thereby further subdividing the rating of multicast programs and improving quality of service.

A multicast service processing method according to an embodiment of the invention includes: acquiring multicast program audience rating statistical information; determining a multicast program priority according to the audience rating statistical information and configuring an access device with the priority; and performing, by the access device, differential processing of a multicast program according to the multicast program priority.

The multicast service processing method according to the embodiment predicts a future audience rating according to audience rating statistics, to determine a processing priority of a program, therefore differential processing of different programs can be done, hot or important programs can be prioritized to ensure quality of service such as switching time and packet loss ratio, and bandwidth is reserved and pushed to the edge.

An access device according to an embodiment of the invention includes: an IGMP message processing unit, adapted to receive a message including a multicast program request message from a terminal device; a router joining and quitting message unit, adapted to send a multicast program to the terminal device; an audience rating statistic unit, adapted to acquire multicast program audience rating statistical information; a multicast program priority determination unit, adapted to determine a multicast program priority according to the audience rating statistical information; and a multicast program processing unit, adapted to perform differential processing of a multicast program requested for by the terminal device according to the multicast program priority, and send the processed multicast program to the router joining and quitting message unit.

The access device according to the embodiment predicts a future audience rating according to the audience rating statistics, to determine a processing priority of a program. Therefore, differential processing of different programs can be done, hot or important programs can be prioritized to ensure quality of service such as switching time and packet loss ratio, and bandwidth is reserved and pushed to the edge.

A multicast service processing system according to an embodiment of the invention includes: an access device which includes a multicast behavioral information acquisition unit, a sender unit and a multicast program processing unit; and a policy server which includes an audience rating statistic unit, a multicast program priority determination unit and a configuration unit, in which
the multicast behavioral information acquisition unit is adapted to acquire user multicast behavioral information according to a multicast program request message of a terminal device received by the access device;
the sender unit is adapted to send the user multicast behavioral information to the policy server;
the audience rating statistic unit is adapted to acquire multicast program audience rating statistical information according to the user multicast behavioral information;
the multicast program priority determination unit is adapted to determine a multicast program priority according to the audience rating information;
the configuration unit is adapted to configure the access device with the multicast program priority; and
the multicast program processing unit is adapted to perform differential processing of a multicast program requested for by the terminal device according to the multicast program priority.

With the system according to the embodiment, differential processing of different programs can be done, hot or important programs can be prioritized to ensure quality of service such as switching time and packet loss ratio, and bandwidth is reserved and pushed to the edge.

A multicast service processing method according to an embodiment of the invention includes: determining whether a multicast channel requesting to join is permitted to join at a current service port upon receiving a joining message of the multicast channel; if it is permitted, forwarding the multicast channel requesting to join; otherwise checking among channels being forwarded at the service port that whether there is a multicast channel which receives no response after requesting to quit before a specific group query response time expires, if there is, stopping forwarding the multicast channel requesting to quit, to forward the multicast channel requesting to join; otherwise rejecting joining of the multicast channel.

With the multicast service processing method according to the embodiment, in the case of controlled access with a single port and multiple users, rational and effective control of multicast channel switching can be achieved within a fast response time, thereby reducing time delay of channel switching and ensuring quality of multicast service.

An access according to an embodiment of the present invention includes a channel quitting processing unit and a channel joining processing unit, in which:
the channel quitting processing unit is adapted to send to a service port receiving a multicast channel which requests to quit, a specific group query message of the multicast channel, after the access device receives a quitting message of the multicast channel, and strop forwarding the multicast channel which requests to quit after a specific group query response time expires;
the channel joining processing unit includes a multicast forwarding unit, a first control unit and a second control unit, of which:
   the multicast forwarding unit is adapted to control multicast channel forwarding;
   the first control unit is adapted to determine whether a multicast channel requesting to join is permitted to join at a current service port after the access device receives a joining message of the multicast channel, and if it is permitted, instructing the multicast forwarding unit to forward the multicast channel requesting to join; otherwise handing over to the second control unit; and
   the second control unit is adapted to check among channels being forwarded that whether there is a multicast channel which receives no response after requesting to quit before a specific group query response time expires, if there is, instructing the multicast forwarding unit to stop forwarding the multicast channel requesting to quit, to forward the multicast channel requesting to join; otherwise rejecting joining of the multicast channel.

With the access device according to the embodiment, in the case of controlled access with a single port and multiple users, rational and effective control of multicast channel switching can be achieved within a fast response time, thereby reducing time delay of channel switching and ensuring quality of multicast service.

A multicast service processing method according to an embodiment of the present invention includes: measuring statistics of and acquiring, by an access device, a user frequently selected multicast channel; creating a multicast group of user frequently selected multicast channels in a multicast forwarding table of a main control board of the access device; and requesting, by the main control board, according to the multicast group, the network side to distribute multicast flow of the user frequently selected multicast channel.

With the multicast service processing method according to the embodiment, user frequently selected multicast channels of the access device can be cumulatively measured, and a main control board multicast processing unit of the access device may voluntarily request to add multicast flow of the user frequently selected multicast channel, thereby reducing time delay of multicast channel joining and improving the efficiency of multicast service processing.

A multicast service processing system according to an embodiment of the invention includes an IP MAN and an access network. The access network includes an access device, and the access device includes a main control board and at least one interface board connected with the main control board. The main control board includes a main control board multicast processing unit, a main control board storage unit adapted to store a main control board multicast forwarding table and a main control board multicast duplication unit, and the interface board includes an interface board storage unit adapted to store an interface board multicast forwarding table and an interface board multicast duplication unit adapted to duplicate multicast flow to a user port; an intelligent decision device connected with the main control board multicast processing unit of the access device, adapted to acquire a user frequently selected multicast channel.

With the multicast service processing system according to the embodiment, user frequently selected multicast channels of the access device or the access network can be cumulatively measured, and a main control board may voluntarily push multicast flow of the user frequently selected multicast channel to a interface board, alternatively, the network side may voluntarily push a user frequently selected multicast group to the access device, thereby reducing time delay of multicast channel joining and improving the efficiency of multicast service processing.

An access device according to an embodiment of the invention includes a main control board and at least one interface board connected with the main control board. The main control board includes a main control board multicast processing unit, a main control board storage unit adapted to store a main control board multicast forwarding table and a main control board multicast duplication unit, and the interface board includes an interface board storage unit adapted to store an interface board multicast forwarding table and an interface board multicast duplication unit adapted to duplicate multicast flow to a user port. The access device further includes: an intelligent decision device connected with the main control board multicast processing unit, adapted to acquire a user frequently selected multicast channel according to multicast group information kept by the main control board multicast processing unit, and instruct the main control board multicast processing unit to acquire multicast flow of the user frequently selected multicast channel.

With the access device according to the embodiment, the main control board multicast processing unit of the access device may voluntarily request to add multicast flow of a user frequently selected multicast channel, thereby reducing time delay of multicast channel joining and improving the efficiency of multicast service processing.

### Brief Description of the Drawings

Figure 1 is a structural diagram of a multicast system in the prior art;

Figure 2 illustrates a network structure of a system in the prior art which implements multicast service with IGMP protocol;

Figure 3 is a flow chart of a first embodiment of the multicast service processing method according to the invention;

Figure 4 is a block diagram of the principle of a first embodiment of the access device according to the invention;

Figure 5 is a flow chart of a second embodiment of the multicast service processing method according to the invention;

Figure 6 is a block diagram of the principle of a second embodiment of the access device according to the invention;

Figure 7 illustrates a network structure of a first embodiment of the multicast service processing system according to the invention;

Figure 8 is a flow chart of a third embodiment of the multicast service processing method according to the invention;

Figure 9 illustrates a network structure of IPTV service according to an embodiment of the invention;

Figure 10 is a flow chart of multicast quitting process in the embodiment of the invention as illustrated in Figure 9;

Figure 11 is a flow chart of multicast joining process in the embodiment of the invention as illustrated in figure 9;

Figure 12 is a structural diagram of a third embodiment of the access device according to the invention;

Figure 13 is a flow chart of a fourth embodiment of the multicast service processing method according to the invention;

Figure 14 is a flow chart of a fifth embodiment of the multicast service processing method according to the invention;

Figure 15 is a structural diagram of a fourth embodiment of the access device according to the invention;

Figure 16 is a structural diagram of a fifth embodiment of the access device according to the invention;

Figure 17 illustrates a network structure of a second embodiment of the multicast service processing system according to the invention; and

Figure 18 illustrates a network structure of a third embodiment of the multicast service processing system according to the invention.

### Detailed Description of the Invention

Embodiments of the invention are further described in detail with reference to the drawings.

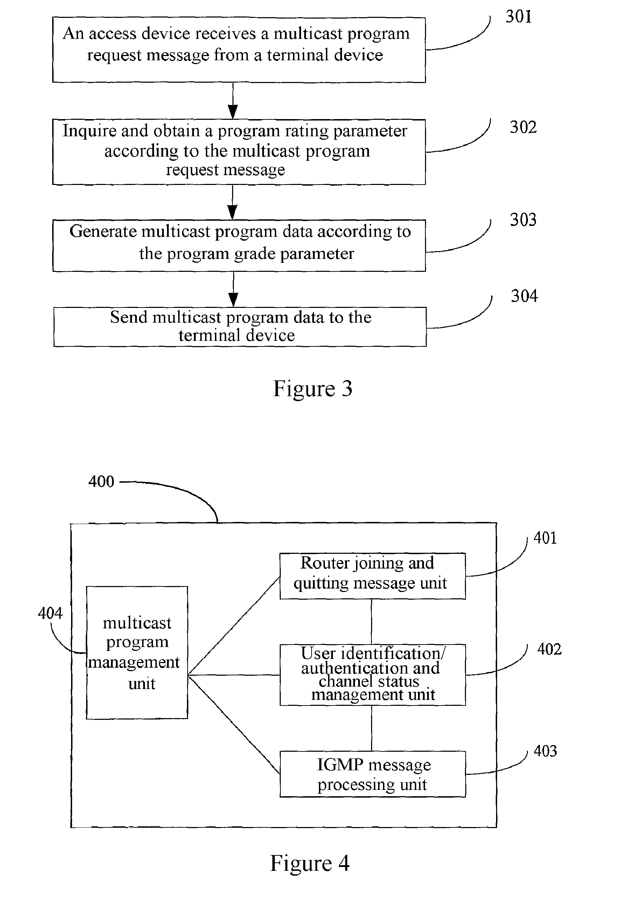

Now refer to figure 3, which illustrates a flow chart of a first embodiment of the multicast service processing method according to the invention including the following steps:

At step 301, an access device receives a multicast program request message from a terminal device.

At step 302, a program rating parameter is inquired and obtained according to the multicast program request message.

The multicast program rating parameter adds a new parameter, i.e. multicast program rated priority information, to rating parameters of the prior art, so as to further subdivide multicast programs under prior rating. This parameter may further include multicast group IP address, and/or multicast source IP address, and/or multicast program name, and/or multicast program priority, and/or multicast VLAN, and/or port information to an uplink router. The rated priority includes information sucha as program bandwidth, and/or program provider, and/or program category.

At step 303, multicast program data is generated according to the program rating parameter.

At step 304, the multicast program data is sent to the terminal device.

The multicast program data can be sent to the terminal device according to a preset control policy which may be configured according to a rated priority and a rating form of the multicast program data. The rating form refers to the representation of multicast program rating. For example, if numerals are used, program A may be rated 1, program B may be rated 2, and so forth; if characters are used, program A may be rated AAA, program B may be rated AAAA; and if characters and numerals are used in combination, program A may be rated X.1, program B may be rated X.2. The rated priority is a priority resulting from multicast program rating, which is done by, for example, sorting according to rating data determined by the rating form, such as sorting according to the ascending or descending order of numeral values, sorting selected character strings according to the order of the characters, or sorting by arranging the character strings into a particular arrangement.

The following control policies can be used: multicast programs with lower rated priorities are put offline first; multicast programs with higher rated priorities are put offline first; rated priorities of multicast programs are higher than a threshold (depending on rated priorities and rating criteria) and the maximum number of multicast programs concurrently online of a terminal device is a specific value, e.g. 1; rated priorities of multicast programs are lower than a threshold (depending on rated priorities and rating criteria) and the maximum number of multicast programs concurrently online of a terminal device is a specific value, e.g. 3.

There can be many control policies as mentioned above, which are activated according to system or activated according to a multicast terminal device. Alternatively, some of the control polices can be activated according to system while other control polices are activated according to a terminal device port; If multiple control polices are to be activated, we may choose the activation order to be: control policies based on system precede control policies based on a terminal device port, or, control policies based on a terminal device port precede control policies based on system.

For example, a control policy can be set that rated priorities of multicast programs are higher than 10, of which rating criterion is multicast bandwidth, rated priorities are numerals, the maximum number of programs concurrently online of a terminal device is 1, and the control policy is based on system, i.e. it deals with selections by any terminal device in a same way as long as these criteria are met. If a multicast program with rated priority of 15 is to be selected by a terminal device, and rated priorities of other multicast programs online are lower than 15, after a selecting message (IGMP report message) of the terminal device is received, the multicast programs online are put offline and the selected channel is configured to be forwarded regularly. Further, all the control policies above take effect when the terminal device is online.

An example of multicast program rated aaa can be generated by a configuration command below: program add group-ip 228.1.1.1 source-ip 1.1.1.1 name phenix-tv priority 5 vlan 120 bind-port 8 grade aaa, of which group-ip, source-ip, name, priority, vlan, bind-port and grade represent parameters for configuring the multicast program, values of the parameters follow right after. The command is to add a program with a multicast group IP address of 288.1.1.1, a multicast source IP address of 1.1.1.1, a multicast program name of phenix-tv, a multicast priority of 5, a multicast program vlan of 120, a bound uplink port of 8 and a multicast program rating of aaa.

Between step 301 and step 302, i.e. when the terminal device selects a multicast program, the terminal device may authenticate the multicast program according to a permission of the terminal device to determine the validation of the multicast program selected by the terminal device. After the authentication is passed, multicast bandwidth CAC (Connection Access Control) is performed and the selected multicast program is rated.

The multicast service processing method according to the embodiment adds a new parameter, i.e. multicast program rated priority information, to multicast program rating parameters in the prior art, thereby further subdividing multicast program rating and improving quality of service, so that service providers may have terminal devices select some of multicast programs before other programs according to the multicast program priority; and service providers may provide differential services based on programs and improve their competitiveness. Furthermore, the embodiment of the invention rates programs based on their bandwidths, which is, only one program of high bandwidth can be selected by a terminal device, whereas multiple programs of low bandwidths can be selected. Therefore the bandwidth of the terminal device can be used effectively to offer a good user experience of selecting a multicast program by a terminal device and evade the restriction of number of programs selected at a same time due to multicast bandwidth CAC.

Now refer to figure 4, which is a block diagram of the principle of a first embodiment of the access device according to the invention.

The access device 400 includes a router joining and quitting message unit 401, an IGMP message processing unit 403 and a multicast program management unit 404. Particularly, the multicast program management unit 404 is adapted to configure and manage rating forms and rated priorities of multicast programs and generate multicast program data according to the rating form and the rated priorities; the IGMP message processing unit 403 is adapted to receive messages including multicast program request messages sent from a terminal device; and the router joining and quitting message unit 401 is adapted to forward the multicast program data, that is, to inject/send the multicast program data to the access device.

Additionally, the access device 400 may further include a terminal device identification/authentication and channel status management unit 402, adapted to check the validation of the terminal device and determine a channel forwarding control policy according to the rated priority of a multicast program selected by the terminal device. The control policy may include: putting multicast programs with lower rated priorities offline first; putting multicast programs with higher rated priorities online first; and setting the maximum number of programs concurrently online according to rated priorities.

Of course, the access device according to the embodiment of the invention is not limited to the above structure but can also be structured in other ways under the same principle. For example, the terminal device identification/authentication and channel status management unit 402 can be divided into two separate units, i.e. an authentication unit and a channel status management unit.

The access device 400 processes a multicast service in a similar procedure to the multicast service processing method according to the embodiment of the invention as illustrated in figure 3, which is omitted here for clarity.

As can be seen, the access device according to the embodiment configures and manages rating forms and rated priorities of multicast programs, and generates multicast program data according to the rating form and the rated priorities upon receiving multicast program request messages from a terminal device, thereby subdividing the multicast program rating and improving quality of service.

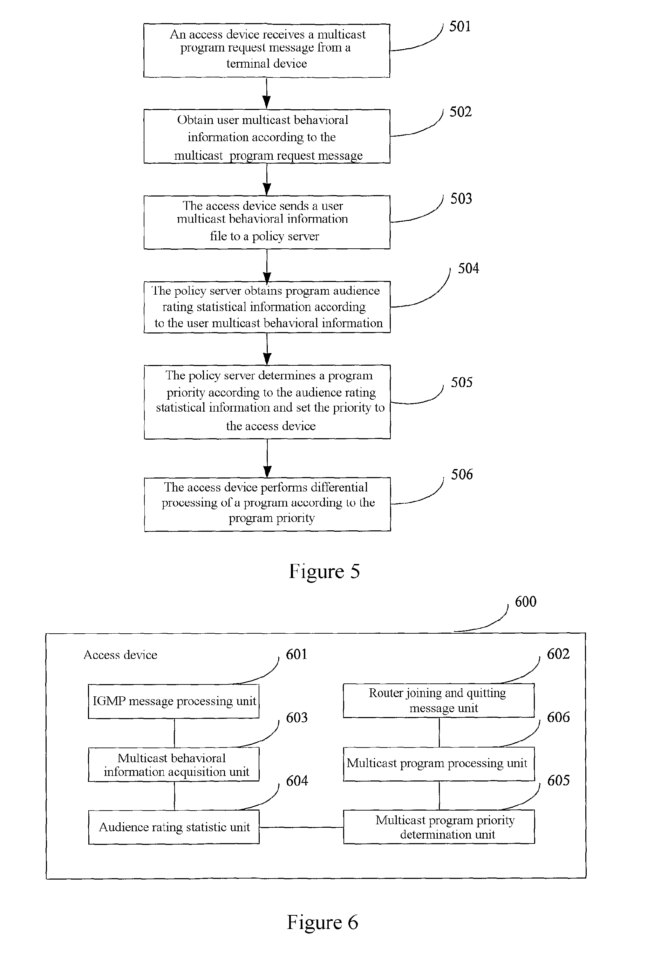

Refer to figure 5, which is a flow chart of a second embodiment of the multicast service processing method according to the invention including the following steps.

At step 501, an access device receives a multicast program request message from a terminal device.

At step 502, user multicast behavioral information is acquired according to the multicast program request message.

The multicast program request message includes a program watching request message and a program quitting request message; the user multicast behavioral information includes user joining time, user quitting time, user number, program watching number, etc.

The access device receives multicast program request messages sent by the terminal device including program request information, records the program request information and determines user multicast behavioral information according to the program request information.

At step 503, the access device sends to a policy server a user multicast behavioral information file including file head and multiple pieces of user behavioral information records. The file head includes statistical starting time, statistical ending time and user device number, the user multicast behavioral information includes user joining time, user quitting time, user number and program watching number.

At step 504, the policy server acquires program audience rating statistical information according to the user multicast behavioral information. Particularly, the policy server takes a piece of record and determines whether a sampling point is in the time range of the record; if there is, the policy server determines the category of the program, increments the number of users watching the program by one, and determines whether the record is the last piece; and if it is, the policy server acquires the ratio of the number of users watching the program to the total number of devices, otherwise the policy server continues to the next record.

At step 505, the policy server determines a program priority according to the audience rating statistical information and configures the access device with the priority. For example, processes such as high-order curve fitting, weighted arithmetic averaging, and least square root can be performed with the statistical information so as to determine the program priority. Particularly, configuring the access device with the priority can be done periodically or in real time. Particularly, periodical configuration is as follows: configure the access device with priorities of programs of a same time slot together at once, the access device starts a timer which is configured by refreshing current priority of the access device with the priority information; and real time configuring is sending in real time a desired program priority to a designated access device which updates its stored priority configuration with the priority information.

At step 506, the access device performs differential processing on the program according to the program priority, for example, by reserving bandwidth for the program, and/or statically forwarding the program to an access layer device, and/or guaranteeing program quality according to 802.1p information, and/or reserving multicast resources for the program, and/or sending IGMP protocol first in concurrent situations. Particularly, reserving bandwidth for the program includes: determining whether the sum of bandwidth allocated and bandwidth to be allocated for respective points is lower than the maximum multicast bandwidth, and if it is lower, a normal process is performed; otherwise, checking whether the program priority is higher than a threshold, if it is higher, the program is transmitted over the allocated bandwidth; otherwise the multicast program is rejected. Particularly, statically forwarding to the access device is: duplicating the program of a priority above the threshold to a line card which creates a multicast table entry of the program, adding a user port to the multicast table entry. Particularly, guaranteeing program quality according to 802.1p information is as follows: marking the 802.1p information of the program in the order of the priority, and marking multicast program messages with the 802.1p information with a hardware multicast table or an ACL (Access Control List).

As described in the above embodiment, the policy server obtains the program audience rating statistical information according to the user multicast behavioral information sent by the access device, however the embodiment of the invention is not limited thereto but also obtains the program audience rating statistical information in an alternative way. Further, the measurement of the program audience rating statistics can be done by an access device itself.

The multicast service processing method according to the embodiment of the invention is described in details below.

Programs can be divided into those with different priorities, typically four priorities, and for programs of each priority, an access device may take a different processing action, each of which can be enabled or disabled. Typical actions are as depicted in Table 1.

**Table 1:**

| Name | Scheduled queue | Bandwidth reserved | Statically forwarding to edge node | Mark 802.1p | Multicast resources reserved | Process IGMP first in concurrent situation |
|---|---|---|---|---|---|---|
| 4 | Highest priority | Yes | Yes | 6 | Yes | Yes |
| 3 | Second highest priority | No | No | 5 | No | No |
| 2 | Normal priority | No | No | 4 | No | No |
| 1 | Low priority | No | No | 3 | No | No |

The scheduled queue in Table 1 indicates that a program of a higher priority enters a higher scheduled queue, so that it is ensured to be sent preferentially to a channel in a way that the program of a higher priority can be sent preferentially upon congestion of an egress. The form of a layer-3 forwarding table in the device is {ingress port, ingress VLAN, multicast group IP, multicast source IP, egress vlan + port list, egress queue, 802.1p}, and the egress queue of the program can be defined as a high priority queue in the multicast forwarding table, so that duplicated messages are inserted to the high priority queue when hard duplicating the multicast program, and messages in the high priority queue are sent out preferentially.

Whether to reserve bandwidth indicates that bandwidth can be reserved for a high priority program in the device or network to ensure that no other service or low priority program takes the bandwidth of a high priority time. In multicast CAC on the device, uplink ports, line boards and user ports may restrict maximum multicast bandwidth. The bandwidth of each program can be measured by statistics or obtained by configuration. When bandwidth is requested for a new multicast program, it is checked that whether multicast bandwidth allocated plus program bandwidth to be allocated is lower than the maximum multicast bandwidth, and if this condition is not met, new multicast programs are rejected. For high priority programs, bandwidth can be reserved.

Whether to statically forward to an edge node (i.e. the access device) shows that: a high priority program which is not selected by any user is pulled statically to a farthest edge node, so as to ensure that it can reach a user by only one time of duplication, hence, a high priority program can be added as fast as possible. Two levels of duplications exist at an access device for performance, one of which is on a line card and the other of which is on a network board with a layer-3 multicast table thereon, the form of which is {ingress port, ingress VLAN, multicast group IP, multicast source IP, egress vlan + line card list, egress queue, 802.1p}. For high priority programs, the programs can be fixed to all the line cards and are duplicated on each of the line cards all the time even if no user watches it. Once a user selects the program, the only thing has to be done is to create a multicast table entry of the program by a line card and add a user port to the multicast table of the line card.

A high priority program is marked with high 802.1p, which instructs a low-level device that quality of the high priority program is to be guaranteed according to the 802.1p information. The 802.1p of a multicast program message can be marked with a hardware multicast table or an ACL (Access Control List).

Whether to reserve a multicast resource indicates: whether some multicast resources, e.g. a multicast table entry in the device, a multicast VLAN (for example, a source IP address is mapped to a multicast VLAN to support an SSM), etc., are required for a multicast program. Reservation of a multicast resource can be set for a high priority program in case no resource is available to the high priority program due to preemption of a low priority program. A layer-2 multicast table on a line card can be in a form of {multicast VLAN, multicast group MAC or IP, egress pvc or port list}. A multicast table entry can be created fixedly for and a multicast VLAN can be occupied fixedly by a higher priority program, and it is not necessary to request for any resource when the program is the first to be ordered.

In order to ensure a timely process of an IGMP protocol message by the access device, a concurrent manner can be adopted in the principle that firstly all IGMP messages enter a buffer queue for buffering and a plurality of concurrent processes fetch the IGMP messages from the head of the queue for handling. In order to ensure a high priority program to be processed preferentially, it can be determined when an IGMP message enters the buffer queue whether it relates to a request for a high priority program, and if so, the IGMP message can be inserted preferentially into the head of the queue, thereby ensuring a preferential process of the program.

Furthermore, processing actions of each priority can be configured to comply with different operation requirements.

An access device can be configured with a program priority via a configuration interface, by a command line, a network administrator or a policy server. In practice, a program priority is not constant but associated with time or region. For example, shopping, cooking, entertainment channels are popular in daytime, and football channel would be hot during World Cup; electronic gaming and sports channel may be popular in dormitories, and finance, geography, and traveling channels may be watched most in a high class neighborhood. Device adaptability and IPTV service performance can be improved greatly if program priorities in a particular period of time of a region can be predicted automatically and accurately, and configured automatically to a bearer device of MAN.

An access device is a multicast duplication point closest to users where user multicast behavioral information can be acquired including {user number, program watching number, watching starting time, watching ending time}. An access device processes IGMP protocol messages sent by the user, therefore the device receives and records every watching or quitting request from the user. The access device may organize such information periodically into a file, for example, generating a local file every two hours, in which statistical starting time, statistical ending time and device number are added, and send the file to a policy server by a transportation protocol.

The policy server opens the file and measures audience rating statistics of the access device in the statistical time period. An audience rating statistic table is like Table 2.

**Table 2**

| Program number | Number of watchers at sampling time point 1 | Audience rating at sampling time point 1 | Number of watchers at sampling time point 2 | Audience rating at sampling time point 2 |
|---|---|---|---|---|
| 1 | 10 | 12% | ···. | 12% |
| 2 | 0 | 0 | ··· | 0 |
| 3 | 1 | 1% | ··· | 1% |
| ··· | 30 | 36% | ···. | 36% |

A future audience rating can be predicated when sufficient audience rating statistical records are accumulated. For audience rating prediction, statistical samples are selected first, an appropriate method is to select the samples by day, assuming that samples at a time period in a previous day is useful for the predication of the same time period in a next day. Thus audience rating of the next day can be predicated in each day. It should be noted that work days and holidays shall be distinguished in a way that statistical samples for a work day are selected according to work day statistics while statistic samples for a holiday are selected according to holiday statistics. Numerous predication methods can be used, including high-order curve fitting, weighted arithmetic averaging, least square root, etc.

Weighted arithmetic averaging is illustrated below as an example. Some environment parameters are as follows: today is Thursday, in order to predict the audience rating of program A at 2:00 p.m. tomorrow (Friday), seven audience rating statistical samples of records are used including 2:00 p.m. this Wednesday, 2:00 p.m. this Tuesday, 2:00 p.m. this Monday, 2:00 p.m. last Friday, 2:00 p.m. last Thursday, 2:00 p.m. last Wednesday and 2:00 p.m. last Tuesday, weights of which are 60, 20, 10, 5, 2, 2, 1, respectively. Thus, the weighted arithmetic average is calculated as (audience rating at 2:00 p.m. this Wednesday) * 60% + (audience rating at 2:00 p.m. this Tuesday) * 20% + (audience rating at 2:00 p.m. this Monday) * 10% + (audience rating at 2:00 p.m. last Friday) * 5% + (audience rating at 2:00 p.m. last Thursday) * 2% + (audience rating at 2:00 p.m. last Wednesday) * 2% + (audience rating at 2:00 p.m. last Tuesday) * 1%.

After audience rating at an access device is predicted, priorities of programs on the access device can be determined according to the predicated audience rating. First, refreshing cycle of program priority is to be determined, which can neither be too short because bearer network devices would be busy if program priorities are modified frequently, nor too long in order to give program priorities in real time. Two hour is an appropriate time. The refreshing cycle can be configured at a policy server. A prediction cycle is generally shorter than a refreshing cycle. A predicated average audience rating in a refreshing cycle is measured by an arithmetic average method, priorities are determined according to the predicated audience rating, which is described below by an example.

To determine the priority of a program from 2:00 to 4:00 p.m. on Friday, assuming that the predication cycle is 15 minutes, predicated audience ratings of the program from 2:00 to 4:00 are averaged to obtain a predicated average audience rating of the program from 2:00 to 4:00. The priority of the program in this time period is determined in the rules that programs of an audience rating above 20% are set with highest priority, programs of an audience rating between 10% and 20% are set with second highest priority, programs of an audience rating between 2% and 10% are set with normal priority, and programs of an audience rating below 2% are set with low priority.

The rules can be customized and modified on a policy server. The policy server may also support manual modification of the priorities of programs in a period of time at the access device. For example, if a hot program is going to be on an unpopular channel tomorrow, the priority of the program in the time period can be raised manually.

As can be seen from the above embodiment, the multicast service processing method according to the embodiment can predicate a future audience rating from statistics of audience ratings, to determine processing priorities of programs, differential processing of different programs can be done, and hot or important programs can be prioritized to ensure quality of service such as switching time and packet loss ratio, and bandwidth is reserved and pushed to the edge.

Now refer to figure 6, which 6 is a block diagram of the principle of the second embodiment of the access device according to the invention.

The access device 600 includes an IGMP message processing unit 601, a router joining and quitting message unit 602, an audience rating statistic unit 604, a multicast program priority determination unit 605 and a multicast program processing unit 606. Particularly, the IGMP message processing unit 601 is adapted to receive messages including multicast program request messages from a terminal device; the router joining and quitting message unit 602 is adapted to send a multicast program to the terminal device; the audience rating statistic unit 604 is adapted to acquire multicast program audience rating statistical information; the multicast program priority determination unit 605 is adapted to determine multicast program priorities according to the audience rating statistical information; and the multicast program processing unit 606 is adapted to perform differential processing of the multicast programs as requested for by the terminal device and send the processed multicast programs to the router joining and quitting message unit.

The audience rating statistic unit 604 may obtain the multicast program audience rating statistic information in various ways. As depicted in this embodiment, the multicast program audience rating statistic information is obtained from information sent from a multicast behavioral information obtaining unit 603 in the access device 600. As illustrated in figure 6, the multicast behavioral information obtaining unit 603 is adapted to obtain user multicast behavioral information from the multicast program request message, and the audience rating statistic unit 604 is adapted to obtain the multicast program audience rating statistical information according to the user multicast behavioral information.

The above multicast program processing unit 606 can include any one or multiple of the sub-units below (not shown in the figure): a bandwidth reservation sub-unit adapted to reserve bandwidth for the multicast program, a statically forwarding sub-unit adapted to statically forward the multicast program to the access device, a quality guarantee sub-unit adapted to guarantee program quality of the multicast program according to 802.1p information, a multicast resource reservation sub-unit adapted to reserve multicast resources for the multicast program and a concurrent processing sub-unit adapted to insert the multicast program preferentially to head of a buffer queue for storage of the multicast program in the case of multiple concurrent processes.

The access device 600 processes multicast service in a similar procedure to the embodiment as illustrated in figure 5 and therefore is omitted here for clarity.

In order to reduce the processing burden of the access device, multicast program priorities can alternatively be determined in the help of a policy server, which can configure the access device with the multicast program priorities in real time or periodically.

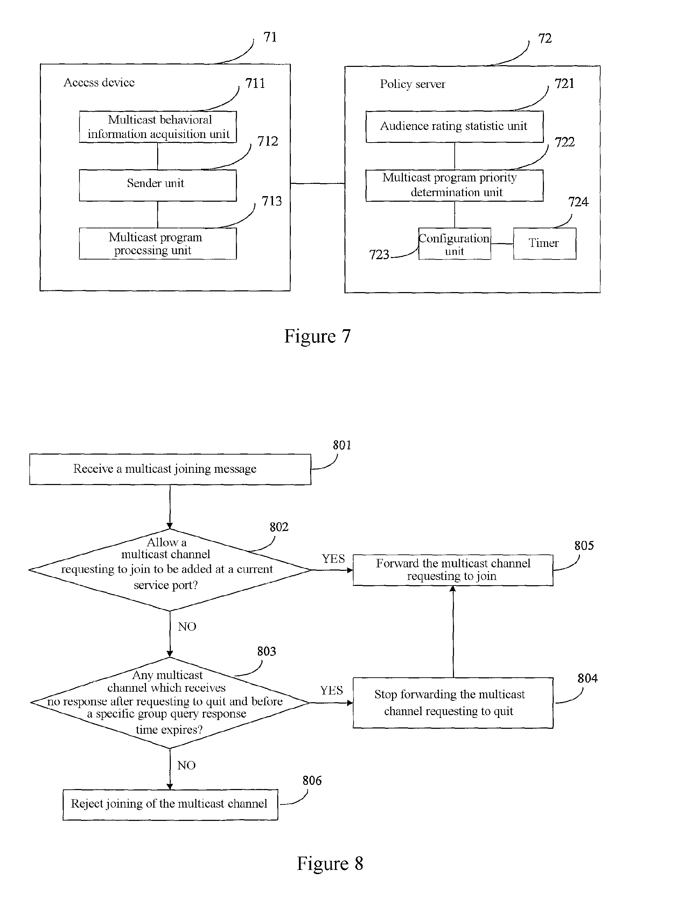

Figure 7 illustrates a multicast service processing system according to an embodiment of the invention including an access device 71 and a policy server 72. The access device 71 includes multicast behavioral information acquisition unit 711, a sender unit 712 and a multicast program processing unit 713; the policy server 72 includes an audience rating statistic unit 721, a multicast program priority determination unit 722 and a configuration unit 723.

After the access device 71 receives a multicast program request message of a terminal device, the multicast behavioral information obtaining unit 711 obtains, according to the multicast program request, user multicast behavioral information including user joining time, user quitting time, user number, program watching number, etc. The sender unit 712 sends the user multicast behavioral information to the policy server 72. After the policy server 72 receives the user multicast behavioral information, the audience rating statistic unit 721 obtains multicast program audience rating statistical information according to the user multicast behavioral information, which can be implemented according to the method of the embodiments stated above. The multicast program priority determination unit 722 determines multicast program priorities according to the audience rating information, which can be implemented according to the method of the embodiments stated above. The configuration unit 723 can configure the access device 71 with determined multicast program priorities in real time or by a timer 724 in the policy server 72 generating a signal periodically which instructs the configuration unit 723 to configure the access device 71 with the multicast program priorities. Thus, the multicast program processing unit 713 in the access device can perform differential processing of the multicast program as requested for by the terminal device according to the multicast program priorities.

As can be seen from the above embodiment, the access device or the multicast service processing system according to the embodiment can predicate a future audience rating from audience ratings statistics to determine the process priority of a program, therefore differential processing of different programs can be done, hot or important programs can be prioritized to ensure quality of service such as switching time and packet loss ratio, and bandwidth is reserved and pushed to the edge. With another multicast service processing method according to an embodiment of the invention, process of the multicast access device receiving a multicast joining message, based on the prior art, rational and effective control of multicast channels requesting to join or quit can be achieved.

In the prior art, upon receiving a quitting message of a multicast channel, the access device sends to a service port receiving the multicast channel a specific group query message of the multicast channel which request to quit, starts a timer for a timer for a fast response time of the specific group query, and stops forwarding the multicast channel requesting to quit immediately after the timer expires.

After a multicast program joining message is received, the processing flow of a third embodiment of the multicast service processing method according to the invention as illustrated in figure 8 includes:

At step 801, a multicast joining message is received.

At step 802, it is determined whether the multicast channel requesting to join is permitted to join at a current service port; if it is permitted, step 805 is performed; otherwise step 803 is performed.

At step 803, it is checked among channels being forwarded that whether there is a multicast channel which receives no response after requesting to quit before a specific group query response time expires; if there is, step 804 is performed; otherwise, step 806 is performed.

At step 804, forwarding the multicast channel requesting to quit is stopped.

At step 805, the multicast channel requesting to join is forwarded.

At step 806, the joining of the multicast channel is rejected.

The above descriptions are explained in details below by an example.

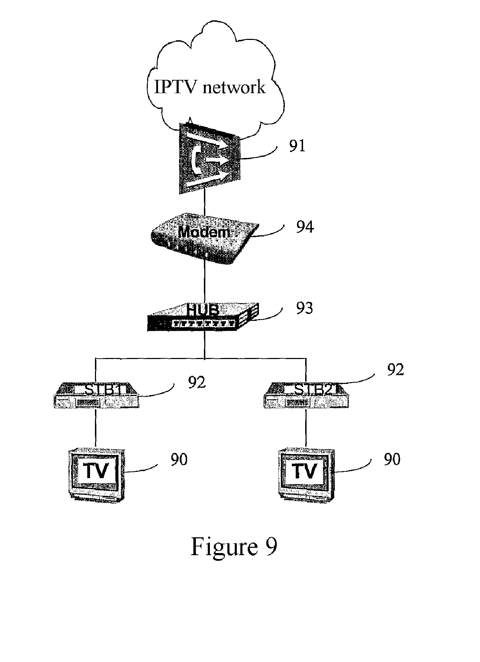

As illustrated in figure 9, in an IPTV access network, an access device 91 of a multicast service is a Digital Subscriber Line Access Multiplexer (DSLAM) functioning as a multicast router and provides the user with a Digital Subscriber Line (xDSL) service port; and at a user side, two set-top box (STB) devices 92 are connected with an xDSL modulation and demodulation (modem) 94 through a hub 93 and each STB is connected with a television set 90.

Operations of each STB device 92 can be divided into three types of powering on, channel switching and powering off. Particularly, the STB device 92 sends a multicast joining message when it powers on, firstly sends a multicast joining message of a current channel and then sends a joining message of a new channel when it switches its channel, and sends a multicast quitting message of a current channel when it powers off. Therefore, a request from the client STB can be processed as a multicast quitting request or a multicast joining request.

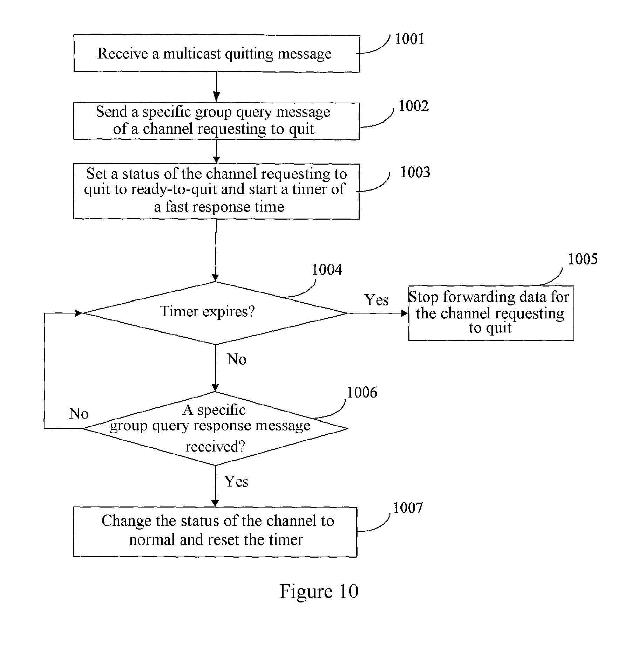

In the embodiment, a multicast quitting message can be processed as illustrated in figure 10.

At step 1001, a multicast quitting message is received.

At step 1002, a specific group query message of the channel requesting to quit is sent to send to an xDSL port receiving the multicast quitting message.

At step 1003, the status of the channel is set to ready-to-quit, and a timer of fast response time is started.

At step 1004, it is checked whether the timer expires, and if so, step 1005 is performed; otherwise step 1006 is performed.

At step 1005, forwarding data of the channel requesting to quit is stopped.

At step 1006, it is determined whether a response message to the specific group query is received, and if so, step 1007 is performed; otherwise step 1004 is performed.

At step 1007, the status of the channel is changed to normal and the timer is reset, and the operation ends.

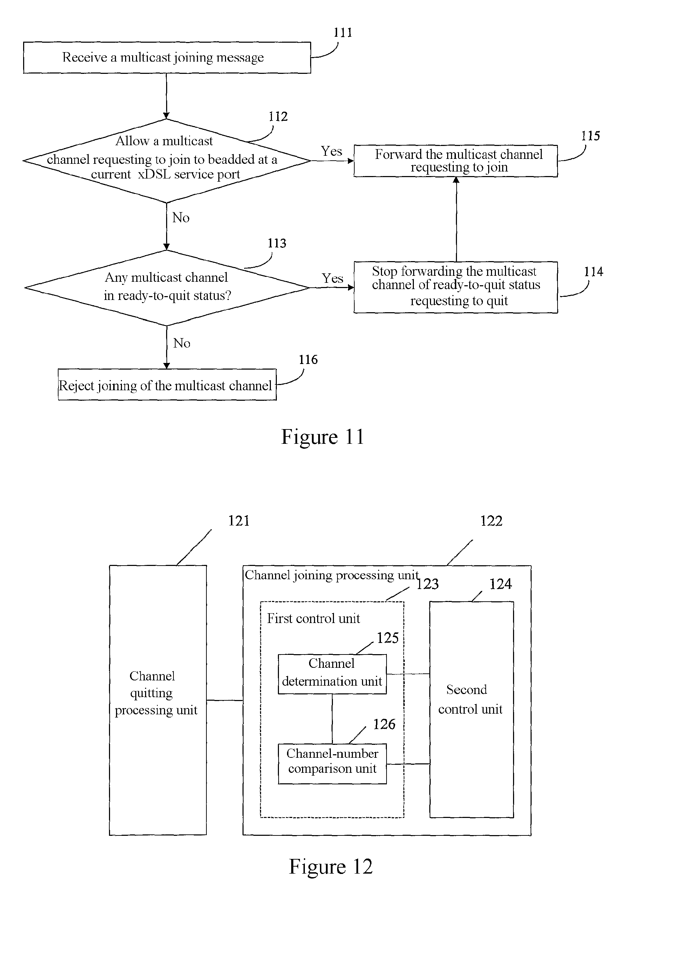

Correspondingly, a multicast joining message can be processed as illustrated in figure 11.

At step 111, a multicast joining message is received.

At step 112, it is determined whether a multicast channel requesting to join is permitted to join at a current XDSL port, and if so, step 115 is performed; otherwise step 113 is performed.

At step 113, it is checked among channels being forwarded that whether there is a multicast channel, the status of which is ready-to-quit, and if so, step 114 is performed; otherwise step 116 is performed.

At step 114, forwarding multicast channel is stopped, which is the earliest to request to quit, and the status of which is ready-to-quit.

At step 115, the multicast channel requesting to join is forwarded and the operation ends.

At step 116, the joining of the multicast channel is rejected and the operation ends.

The principle and applications of the embodiment are described in details below in combination of the above three types of operations in connection with the above process steps.

It is assumed that an STB user performing a power-off or channel switching operation sends a multicast quitting message to the DSLAM, and upon receiving the multicast quitting message sent from the STB, the DSLAM sends to an xDSL port of the STB a specific group query message for a channel from which a quit is requested for, sets the channel in a to-quit-from status and start a fast response timer.

The following three situations may occur in a fast response time, that is, before the timer expires.

1) No joining message is received.

This situation may occur when an STB user powers off.

In this situation, forwarding of data of the channel requesting to quit by the STB user can be stopped when the timer expires.

2) A joining message of a channel being forwarded over the xDSL port is received.

This situation may occur when an STB user is powering off while another STB user is powering on and joining a being forwarded channel or when an STB user is powering off while another STB user switches his channel to a being forwarded channel or when an STB user switches his channel to a being forwarded channel.

In this situation, it is not necessary to add or delete data forwarded for any multicast channel because the channel in which a join is requested for is being forwarded over the current xDSL port.

This situation can further include two scenarios that the channel in which a join is requested for is a being forwarded channel in a to-quit-from status or in a normal status.

For the former scenario, the status of the channel in a ready-to-quit status is modified to the status of normal while clearing the timer and forwarding normally the channel.

For the latter scenario, no process is needed.

3) A joining message of a new channel is received.

This situation may occur when an STB user is powering off while another STB user is powering on and joining a new channel or when an STB user is powering off while another STB user switches his channel to a new channel or when an STB user switches his channel to a new channel.

In this situation, each xDSL service port is configured with the maximum number of accessed multicast channels allowable, which can be set dependent upon a bandwidth of the xDSL port or as required for management. It is determined whether the current xDSL service port allows joining the new channel, that is, whether the number of channels being forwarded over the port is below the maximum number of accessed channels allowable, which is set for the port, and if so, the port allows an access to the new channel for joining; otherwise the new channel can not be added.

In practice, each xDSL service port is configured with the maximum number of accessed multicast channels allowable, which can be set dependent upon a bandwidth of the xDSL port or as required for management. It is determined whether the current xDSL service port allows joining of a new channel, that is, whether the number of channels being forwarded over the port is below the maximum number of accessed channels allowable, which is set for the port, and if so, the port allows an access to the new channel for a join; otherwise the new channel is not allowed.

Further in the above process of determining whether there is currently any channel in a ready-to-quit status, if there are more than one channels in a ready-to-quit status, the port can firstly stop forwarding one of the channels where quitting is desired at the most extent, which can be determined by two ways in practice, the channel which request to quit the earliest or the channel that most close to its expiration time.

Thus in this situation, if the number of channels being forwarded at the port equals to the maximum number of accessed channels allowable, a new channel requesting to join can not be accepted according to access control condition, and thus it is checked that whether there is a channel in a ready-to-quit status, which is still being forwarded, and if so, the port may stop forwarding one of the channels in a ready-to-quit status where quitting is desired at the most extent, and forwards the new multicast channel to join; otherwise the new multicast channel is unavailable to join.

Several STB operations possibly resulting in this situation are described below.

When an STB user is powering off while another STB user is powering on and joining a new channel, the probability of this situation is relatively low because it may occur only if both of the STB users act just within a fast response time.

When an STB user is powering off while another STB user switches his channel, the probability of this situation is also relatively low because it may occur only if both of the STB users act just within a fast response time.

When an STB user switches to a new channel, the probability of this situation is considerably high because the STB user switching channel sends a multicast message for quitting from the current channel and a joining message of the new channel sequentially to the DSLAM device within a very short time. Therefore this embodiment can make more sense to control of a multicast channel when an STB user switches channel.

Correspondingly, an embodiment of the invention further provides an access device where the effective control of multicast channel joining and quitting of the above method is implemented, and is described below.

Refer to figure 12, which is a structural diagram of a third embodiment of the access device according to the invention.

As illustrated, the access device includes a channel quit processing unit 121 and a channel join processing unit 122. Particularly, upon receiving a multicast channel quitting message, the channel quit processing unit 121 sends to a service port of the access device, which receives the multicast quitting message, a specific group query message for a channel requesting to quit, sets the channel in a ready-to-quit status, starts a timer of fast response time and stops forwarding the multicast channel requesting to quit for after the timer expires.

Particularly the channel join processing unit 122 further includes a multicast forwarding unit (not shown), a first control unit 123 and a second control unit 124, where:

The multicast forwarding unit controls multicast channel forwarding in response to an instruction from the other units primarily by two operations: stopping forwarding a specific multicast channel, and starting forwarding a specific multicast channel.

Upon receiving a multicast channel joining message from an STB user, the first control unit 123 determines whether a multicast channel requesting to join is permitted to join at a current port, if so, the first control unit instructs the multicast forwarding unit to forward the multicast channel requesting to join; otherwise hands the message to the second control unit 124 for processing.

In practice, each service port of the access device is configured with a maximum number of accessed multicast channels allowable, which can be set dependent on bandwidth of the service port or as required by management. Checking whether a new channel is allowed to join at the current port is checking whether the number of channels being forwarded at the port is below the maximum number of accessed channels allowable set for the port, and if so, the new channel is allowed to join; otherwise the new channel is rejected.

The first control unit 123 further includes a channel determination unit 125 and a channel-number comparison unit 126. In the above determining process of the channel determination unit 125, it is firstly determined whether the multicast channel that the STB user requests to join is a multicast channel being forwarded at the current service port, and if so, no processing is executed; otherwise the channel-number comparison unit 126 continues to determine whether the number of channels being forwarded at the current service port is below the maximum number of accessed channels allowable, which is set for the port, and if so, the channel-number comparison unit instructs the multicast forwarding unit to start forwarding data of the new channen; otherwise it is preliminarily determined that the channel is rejected.

The second control unit 124 start to operate after the first control unit 123 preliminarily determines not to accept a new channel requesting to join. Upon receiving the instruction from the first control unit 123, the second control unit 124 determine whether there is a multicast channel in a ready-to-quit status among multicast channels being forwarded at the service port, and if so, the first control unit instructs the multicast forwarding unit to stop forwarding the channel requesting to quit and start forwarding the new multicast channel; otherwise it is finally determined not to add the new multicast channel.

Similar to the above process of determining whether there is a multicast channel in a ready-to-quit status, if there are more than one channels in a ready-to-quit status, the access device can firstly stop forwarding one of the channels where quitting is desired at the most extent and which can be determined in two ways in practice, the channel which request to quit the earliest or the channel that most close to its expiration time.

The embodiment of the invention further adds an intelligent decision device in a multicast processing system, which can make accumulative statistics of user frequently selected multicast channels, so that the access device can be enabled automatically to obtain multicast flow of such a user frequently selected multicast channel, thereby reducing time delay of multicast channel joining and improving efficiency of multicast process.

The multicast service processing method according to an embodiment of the invention is described below by an example of multicast process in an access device.

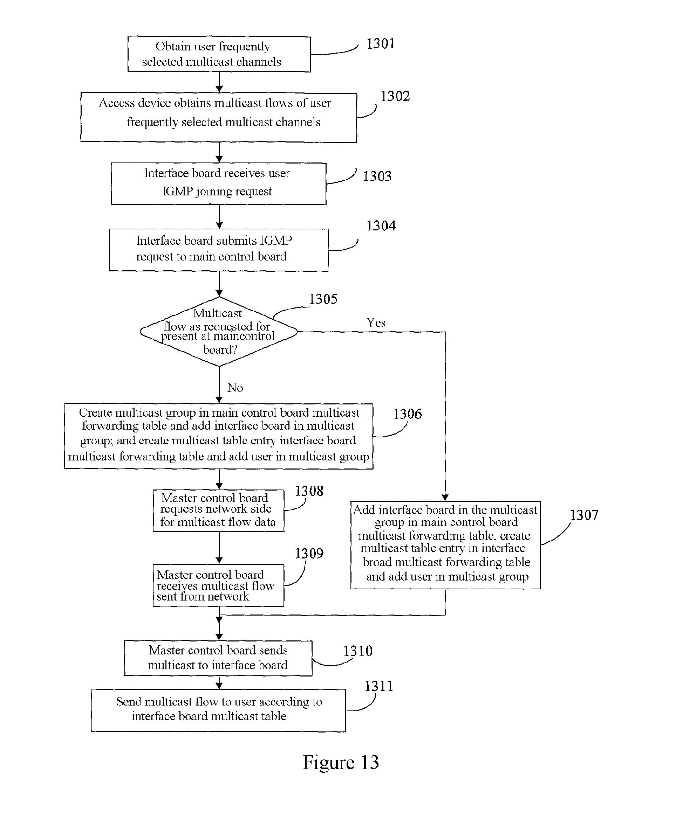

Refer to figure 13, which is a flow chart of the fourth embodiment of the multicast service processing method according to the invention.

At step 1301, the access device obtains user frequently selected multicast channels.

The access device records periodically multicast maintained multicast groups and the time when users join and quit the respective multicast groups according to multicast process information received by and submitted from each interface board to a main control board multicast processing unit for processing and recording, collects statistics of program ordering frequencies and temporal distributions in the interface board, makes further statistics of the statistical results, obtains a distribution of channels in the access device in each period of time over a relatively long period, determines several program frequencies in the access device with the highest ordering frequency or the longest usage time over a relatively long period as user frequently selected multicast channels, and obtains specific interface boards with a relatively high ordering frequency for the multicast channels. The user frequently selected multicast channels can be selected in practice dependent on selection frequencies of multicast channels or usage times thereof or a weighted combination of them.

In addition to being dependent on selection frequencies alone, the frequently selected channel can also be determined according to factors such as bandwidth occupied by a multicast channel, and weighted with a selection frequency of the multicast channel in order to make the inventive solution practical. In a particular weighting process, a selection frequency of a program occupying a relatively large bandwidth can be multiplied with a relatively small weight factor in order to take the bandwidth factor into account. For example, a multicast channel 1 has a selection frequency of 200 times per minute and occupies a bandwidth of 2M, a multicast channel 2 has an selection frequency of 210 times per minute and occupies a bandwidth of 5M, and a multicast channel 3 has an selection frequency of 300 times per minute and occupies a bandwidth of 8M. As assumed by the preset weighting rule, the channel 1 occupying a relatively small bandwidth is weighted 1.1, the channel 2 occupying a slighter larger bandwidth is weighted 1, and the channel 3 occupying a relatively large bandwidth is weighted 0.8. After the weighting process, the channel 1 has a selection frequency of 200 times per minute, the channel 2 has a selection frequency of 210 times per minute, and the channel 3 has a selection frequency of 240 times per minute. A statistical analysis of all the weighted selection frequencies of the multicast channels is made to determine several channels with the highest weighted selection frequency as user frequently selected multicast channels.

At step 1302, the access device obtains multicast flows of the user frequently selected multicast channels.

According to the statistical result in the step 1301, a main control board multicast processing unit of a user sends to the network side a request for a the user frequently selected multicast channels, and the network side sends multicast flows of the user frequently selected multicast channels to the access device in response to the received request.

At step 1303, the interface board receives an IGMP joining request from the user.

The user to order a multicast channel sends to the access device through the STB an IGMP message requesting for selecting the multicast channel.

At step 1304, the interface board submits the IGMP request to the main control board.

Each Interface board submits all IGMP messages received in the interface board to the main control board multicast processing unit of a main control board connected therewith for processing.

At step 1305, the main control board determines whether the multicast flow as requested for is present at the main control board, and if so, step 1307 is performed; otherwise step 1306 is performed.

Upon receiving the multicast flow request sent from the interface board, the main control board determines whether the multicast flow as requested for is present on the main control board according to the information on multicast maintained multicast groups recorded in the main control board multicast processing unit, and if the recorded information on multicast maintained multicast groups indicates that the multicast flow as requested for is present at the main control board, the multicast flow as requested for is present on the main control board; otherwise the multicast flow as requested for is absent on the main control board.

At step 1306, a multicast group is created in a main control board multicast forwarding table and the interface board is added in the multicast group; and a multicast table entry is created in an interface board multicast forwarding table and the user is added in the multicast group.

The main control board adds in the multicast forwarding table of the main control board the multicast group of the multicast channel ordered by the user and adds in the multicast group the interface board submitting the IGMP request (i.e. the interface board where the requesting user is located).

Correspondingly, the main control board multicast processing unit creates a multicast group of the multicast flow of the multicast channel as requested for in response to the IGMP request, adds in the multicast group the user requesting to join and distributes the multicast group to the interface board multicast forwarding table of the interface board submitting the IGMP request.

The step 1307 is to add in the main control board multicast forwarding table interface board in the multicast group, to create a multicast table entry in the interface broad multicast forwarding table and to add the user in the multicast group. Step 1310 is performed.

The main control board adds in the main control board multicast forwarding table interface board submitting the IGMP request in the multicast group of the multicast channel as requested for.

Correspondingly, the main control board multicast processing unit creates a multicast group of the multicast flow of the multicast channel as requested for in response to the IGMP request, adds in the multicast group the user requesting for a join and distributes the multicast group to the interface board multicast forwarding table of the interface board submitting the IGMP request.

At step 1308, the main control board requests the network side for multicast flow data.

If the multicast flow of the multicast channel as requested for by the user is absent at the access device, the main control board sends a control message to an edge device at the network side, and the edge device at the IP metropolitan area network requests the multicast service system through the IP metropolitan area network for sending the multicast flow of the multicast channel; and upon receiving the request, the multicast service center encodes the multicast channel in the MPEG-2 format into a code flow, encapsulates the code flow into User Datagram Protocol/Internet Protocol (UDP/IP) messages and pushes the messages to the IP metropolitan area network, and the messages travel through and are forwarded by the edge device to the access device.

At step 1309, the main control board receives the multicast flow sent from the network.

When the multicast flow forwarded from the edge device arrives at the access device, the main control board multicast duplication unit determines whether the multicast flow is the multicast flow as required according to the main control board multicast forwarding table and receives the multicast flow if so.

At step 1310, the main control board sends the multicast to the interface board.

After the main control board receives the multicast flow, the main control board multicast duplication unit duplicates the multicast onto the interface board recorded in the main control board multicast forwarding table, which requests for the multicast flow.

At step 1311, the interface board sends the multicast flow to the user according to the multicast table.

Upon receiving the multicast flow, the interface board duplicates the multicast onto the user port on the interface board of the user corresponding to the multicast channel in the interface board multicast forwarding table.

The multicast flow arrives at the terminal device over the user port and the user can watch the selected multicast flow upon receiving the multicast flow.

As can be seen from above, because the embodiment makes statistics in the access device to obtain the frequently selected channels of the access device, if the multicast channel as requested for by the user is a frequently selected channel, the main control board multicast processing unit upon receiving the IGMP request from the user can duplicate and push the multicast flow of the multicast channel as requested for directly from the main control board to the interface board where the user is located without requesting the network side for sending the multicast flow, thereby reducing a delay of joining the multicast channel and improving an efficiency of the multicast process.

An interface board multicast processing unit for a multicast process can be additionally arranged in the interface board in order to further optimize the multicast process in the access device.

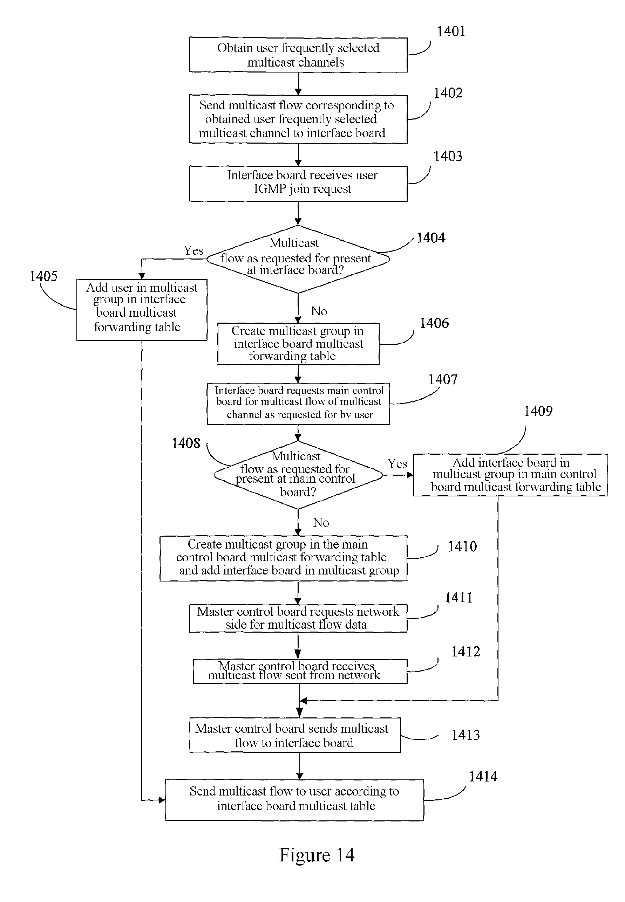

Refer to figure 14, which is a flow chart of a fifth embodiment of the multicast service processing method according to the invention including the following steps.

At step 1401, user frequently selected multicast channels are acquired.

This step is the same as the step 1301 in the embodiment illustrated as figure 13 except that because an interface board multicast processing unit adapted to process a user IGMP message received by the interface board is additionally arranged in the interface board, user frequently selected multicast channels can be obtained from a statistic of multicast maintained multicast groups and the time when users join and quit the respective multicast groups, which are recorded in the interface board multicast processing unit, in the same statistic method as the step 1301 in the embodiment illustrated in figure 13, which is not described again.

Furthermore, specific interface boards with a relatively selection frequency, a relatively large frequency weight or a relatively long usage time of the user frequently selected multicast channels are determined as frequently selected interface boards according to the statistical result, a multicast table of the user frequently selected multicast channels is created in the main control board multicast forwarding table, and the frequently selected interface boards are added in the multicast table of the corresponding user frequently selected multicast channels.

At step 1402, multicast flows corresponding to the obtained user frequently selected multicast channels are sent to the interface board.

According to the statistical result in the step 1401, the main control board multicast processing unit sends to the network side a request for adding the user frequently selected multicast channels, and the network side sends multicast flows of the user frequently selected multicast channels to the access device in response to the received request.

After the main control board receives the multicast flows of the user frequently selected multicast channels, which are sent from the network side, the main control board multicast duplication unit duplicates automatically the multicast flows of the user frequently selected multicast channels into the frequently selected interface boards of the user frequently selected multicast channels according to the multicast group of the user frequently selected multicast channels in the multicast forwarding table.

At step 1403, the interface board receives an IGMP joining request from a user.

When a user selcets a multicast channel, an IGMP message is sent to an access device via the STB, in order to select the multicast channel.

At step 1404, determine whether the multicast flow as requested for is present at the interface board, and if not so, step 1405 is performed; otherwise step 1406 is performed.

The interface board of the access device determines whether the multicast flow is present at the interface board according to the information on multicast maintained multicast groups recorded in the interface board multicast processing unit, and if the recorded information on multicast maintained multicast groups indicates that the multicast group of the multicast flow as requested for is present at the interface board, the multicast flow as requested for is present on the interface board; otherwise the multicast flow as requested for is absent on the interface board.

If the multicast channel as requested for by the user is a frequently selected channel obtained from the statistic in the step 1401 and the user frequently selected multicast channel is a multicast channel in the interface with a relatively high selection frequency, a relatively large channel weight or a relatively long usage time, obviously the multicast flow of the user frequently selected multicast channel was pushed to the interface board and thus the multicast flow is present at the interface board.

At step 1405, the user is added in the multicast group in the interface board multicast forwarding table, and the processing flow returns to step 1404.

The interface board adds in the interface board multicast forwarding table the requesting user in the multicast group corresponding to the multicast channel selected by the user.

At step 1406, a multicast group is created in the interface board multicast forwarding table.

A multicast group of the multicast channel ordered by the user is newly added in the interface board multicast forwarding table and the user is added in the newly added multicast group.

At step 1407, the interface board requests the main control board for the multicast flow of the multicast channel as requested for by the user.

At step 1408, the main control board determines whether the multicast flow as requested for is present at the main control board, and if so, the processing flow goes to step 1409; otherwise the processing flow goes to step 1410.

Upon receiving the multicast flow request sent from the interface board, the main control board determines whether the multicast flow as requested for is present on the main control board according to the information on multicast maintained multicast groups recorded in the main control board multicast processing unit, and if the recorded information on multicast maintained multicast groups indicates that the multicast group of the multicast flow as requested for is present at the main control board, the multicast flow as requested for is present on the main control board; otherwise the multicast flow as requested for is absent on the main control board.

If the multicast channel as requested for by the user is a frequently selected channel obtained from the statistics in the step 1401, the multicast flow of the multicast channel as requested for by the user is surely present in the main control board.

At step 1409, the main control board adds in the multicast forwarding table the interface board in the multicast group, and the processing flow jumps to step 1413.

The interface board submitting the IGMP request is added in the multicast group corresponding to the multicast channel in the main control board forwarding table.

The step 1410 is to create a multicast group in the main control board multicast forwarding table.

The main control board adds in the main control board multicast forwarding table creates a multicast group of the channel ordered by the user and adds the interface board in the multicast group.

At step 1411, the main control board requests the network side for multicast flow data.

At step 1412, the main control board receives the multicast flow sent from the network.

At step 1413, the main control board sends the multicast flow to the interface board.

At step 1414, the interface board sends the multicast flow to the user according to the multicast table in the interface board multicast forwarding table.

The above steps 1411 to 1414 are similar to the steps 1309 to 1313 in the embodiment illustrated in figure 13 and are not described again.

As can be seen from above, a multicast distributed process mode is adopted in the access device in a way that the multicast process of the access device is distributed to the interface board and the main control board for the purpose of a coordinated process, as opposed to the embodiment illustrated in figure 13. With use of the multicast distributed process, the main control board only processes the first request without any repetitive process when a plurality of users join the same program source over the interface board, and the method according to the embodiment of the invention can make full use of process power of the system and improve greatly multicast process power of the access device.

Further due to the multicast distributed process mode, the interface board can configure the multicast forwarding table on the interface board by itself according to the received user IGMP message instead of that the main control board generates the multicast forwarding table from the user IGMP message forwarded from the interface board or transported transparently and distributes the multicast forwarding table to the interface boards. It is sufficient for the main control board to configure its own multicast forwarding table according to the IGMP message forwarded thereto from the interface board. Apparently, the method according to the embodiment of the invention can save communication in the access device, which is advantageous to improve a process speed.

Furthermore if the multicast channel as requested for by the user is not a channel in the interface board with a relatively high selection frequency but is a frequently selected channel, the interface board submits the user IGMP request to the main control board, and after the request arrives at and is processed by the main control board, the interface board can push the multicast channel to the user port of the requesting user without requesting the network side for a multicast join, thereby reducing a delay of the multicast process and improving an efficiency of the multicast process.

The embodiment of the invention illustrated in figure 14 makes use of an intelligent decision solution in which the statistic of frequently selected channels is made in the access device and the resulting frequently selected channels are pushed into the corresponding interface board. The solution can be applicable to a multicast process in an access network by extending the method of the embodiment illustrated in figure 14 particularly as follows.

In each access sub-network in the access network, a statistic of program selection frequencies and temporal distributions in each interface board in each access device is collected according to the time when users join or quit each multicast channel in the interface board, a further synthetic statistic analysis of the statistical results in all the interface boards in all the access devices is made, and frequently selected channels in the access network and the access devices with a relatively high selection frequency, a relatively large frequency weight or a relatively long usage time of the user frequently selected multicast channels are obtained. The statistic method is the same as the step 1401 in the embodiment illustrated in figure 14.

Then according to the statistical result, the main control board multicast duplication units of the access devices with a relatively high selection frequency of the user frequently selected multicast channels are instructed to request the network side for fixedly adding the most frequently selected multicast channels, and the network side sends the multicast flows of the user frequently selected multicast channels to the main control boards of the access devices with a relatively high selection frequency, a relatively large frequency weight or a relatively long usage time of the user frequently selected multicast channels.

Either the method in the embodiment illustrated in figure 13 or that in the embodiment illustrated in figure 14 can be adopted as the multicast processing method in the access device.

In this embodiment, the intelligent decision solution is introduced in the access network to create a preload tree in the network, thereby improving an efficiency of the process throughout the network.

Notably in the embodiment, after the frequently selected channels in the access network and the access devices with the highest usage frequency of the user frequently selected multicast channels are obtained, a reference table can further be established at the network side according to the statistical result to make the respective frequently selected channels corresponding to the access devices with the highest usage frequency of the user frequently selected multicast channels. Referring to the reference table, the network side can push the multicast flows of the user frequently selected multicast channels to the access devices. The solution can further simplify processing of a multicast joining request, and further reduce time delay of the multicast process and improve efficiency of multicast process.

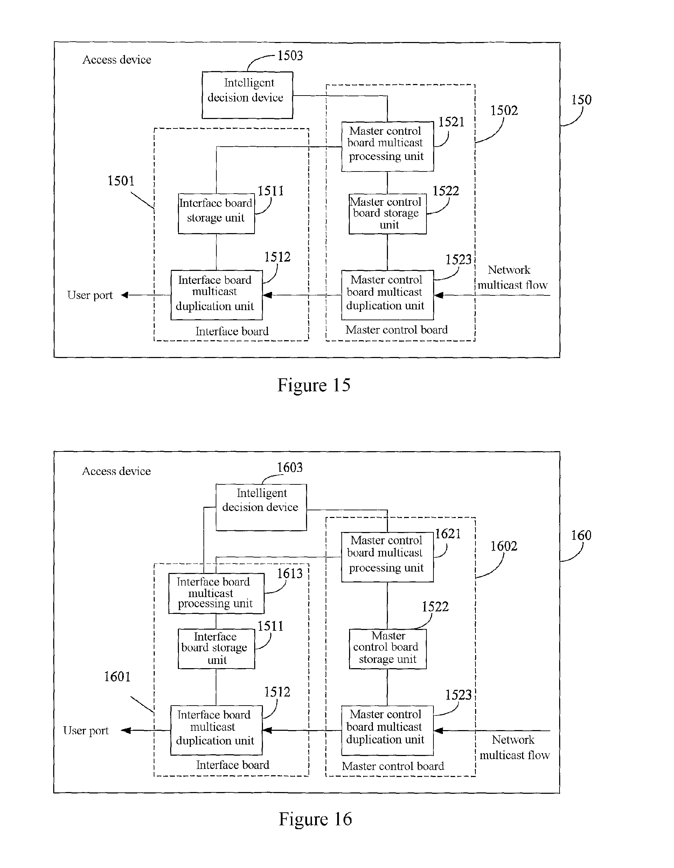

Refer to figure 15, which 15 is a structural diagram of the fourth embodiment of the access device in the multicast processing system according to the invention. As illustrated in figure 15, the access device 150 includes an interface board 1501, a main control board 1502, and an intelligent decision device 1503. The access device is different from that in the prior art in addition of the intelligent decision device 1503 in the access device.

The interface board 1501 includes an interface board storage unit 1511 and an interface board multicast duplication unit 1512, and the main control board 1502 includes a main control board multicast processing unit 1521, a main control board storage unit 1522 and a main control board multicast duplication unit 1523.

The intelligent decision device 1503 connected with the main control board multicast processing unit 1521 is adapted to collect statistics of selection frequencies or frequency weights and temporal distributions of the frequencies or frequency weights of multicast channels in each interface board according to information on multicast maintained multicast groups, user multicast behavior and the time when users join and quit the respective multicast groups in the interface board, which are recorded in the main control board multicast processing unit 1521, to make further statistics of the statistical results, to obtain several program frequencies in the access device in each period of time over a relatively long period, to determine several program frequencies in the access device 150 with the highest selection frequency, the largest frequency weight or the widest distribution of times over a relatively long period as user frequently selected multicast channels. Particularly a weight factor for the weight of a frequency can be set dependent upon a bandwidth occupied for the frequency in a way that a channel occupying a relatively large bandwidth is provided with a relatively small weight factor while a channel occupying a relatively small bandwidth is provided with a relatively large weight factor, so that the frequently selected multicast channels can be processed more reasonably while taking a bandwidth resource into account.

Upon receiving the frequently selected multicast channels, the intelligent decision device 1503 instructs the main control board multicast processing unit 1521 to create a multicast group of the user frequently selected multicast channels according to a main control board multicast forwarding table stored in the main control board storage unit 1522, and the main control board multicast duplication unit 1523 requests the network side for fixedly adding the frequently selected channels according to the multicast group of the frequently selected channels in the main control board multicast forwarding table, so that the network sends multicast flows of the user frequently selected channels.

The interface board storage unit 1511 connected with and controlled by the main control board multicast processing unit 1521 is adapted to record a multicast group of users corresponding to current respective multicast channels in the interface board.

The interface board multicast duplication unit 1512 connected respectively with the interface board storage unit 1511 and the main control board multicast duplication unit 1523 is adapted to duplicate the multicast flows from the main control board multicast duplication unit 1523 according to the multicast group record in a interface board multicast forwarding table and to further duplicate the duplicated multicast flows to user ports corresponding to the respective users in the multicast group.

The main control board multicast processing unit 1521 connected respectively with the main control board storage unit 1522, the interface board storage unit 1511 and the intelligent decision device 1503 is adapted to receive a user IGMP message forwarded from the interface board 1501 and to execute a multicast process in response to the IGMP message as follows.

If the received IGMP message is a request of a user selecting a multicast channel, the main control board multicast processing unit 1521 determines whether multicast flow as requested for by the user is present on the main control board 1502 according to multicast maintained multicast information recorded in the main control board storage unit 1522; if the multicast flow as requested for by the user is present on the main control board 1502, the main control board multicast processing unit 1521 instructs the main control board storage unit 1522 to add the interface board 1501 submitting an IGMP message in a multicast group corresponding to the multicast channel; and after the interface board 1501 is added in the multicast group, the main control board multicast duplication unit 1523 can duplicate the multicast flow of the multicast channel onto the interface board 1501 according to the multicast control board multicast forwarding table. If the multicast flow as requested by the user is absent on the main control board 1502, the main control board multicast processing unit 1521 requests the network for adding and sending the multicast flow.

Also the main control board multicast processing unit 1521 generates a multicast group of a user port corresponding to the multicast flow and adds the multicast group in the interface board multicast forwarding table of the interface board 1501 receiving the user request.

The main control board storage unit 1522 connected respectively with the main control board multicast processing unit 1521 and the main control board multicast duplication unit 1523 and controlled by the main control board multicast processing unit 1521 is adapted to record the interface board multicast group corresponding to the multicast channel.

The main control board duplication unit 1523 connected respectively with the main control board storage unit 1522 and the network side is adapted to receive the multicast flows sent from the network side according to the multicast group record in the master control multicast forwarding table and to duplicate the multicast flows to the respective interface boards in the multicast group.

As can be seen from above, because the intelligent decision device 1503 is added in the access device 150, if the multicast channel as requested for by the user is a frequently selected channel, the multicast flow of the multicast channel is present on the main control board 1502, the user IGMP request is submitted to the main control board 1502, and after the request is processed by the main control board 1502, the interface board 1501 can push the multicast flow to the user port of the requesting user without requesting the network side for a multicast join, thereby reducing a delay of the multicast process and improving an efficiency of the multicast process.

Refer to figure 16, which is a structural diagram of the fifth embodiment of the access device in the multicast processing system according to the invention. As illustrated, the access device 160 includes an intelligent decision device 1603, an interface board 1601 and a main control board 1602. The access device 160 is different from that illustrated in Figure 15 in addition of an interface board multicast processing unit 1613 in the access device 160 in the embodiment.

The intelligent decision device 1603 is connected respectively with the interface board multicast processing unit 1613 and the main control board multicast processing unit 1621. Because the interface board multicast processing unit 1613 is added in the access device 160, it is sufficient in this embodiment for the intelligent decision device 1603 to obtain a statistic of user frequently selected multicast channels in the access device according to user multicast behavior recorded in the interface board multicast processing unit 613 in the same statistic method as that in the embodiment illustrated in Figure 15.

In addition to make statistics of and determine several program frequencies with the highest selection frequency over a relatively long period in the access device 160 as user frequently selected multicast channels, the intelligent decision device 1603 also obtains the respective specific interface boards 1601 with a relatively high usage frequency of the user frequently selected multicast channels. Further the intelligent decision device 1603 instructs the master control multicast processing unit 1621 to create a multicast group for the user frequently selected multicast channels according to a main control board multicast forwarding table, so that the user frequently selected multicast channels correspond respectively to the specific interface boards 1601 with a relatively high usage frequency of the user frequently selected multicast channels, so that when the main control board 1602 receives the multicast flows of the frequently selected channels sent from the network side, the main control board multicast duplication unit 1523 pushes automatically the multicast flows of the frequently selected channels to the specific interface boards 1601 with a relatively high usage frequency, a relatively large frequency weight or a relatively long usage time of the user frequently selected channels according to the multicast group of the user frequently selected multicast channels.

The interface board 1601 includes the following units.

An interface board multicast processing unit 1613 connected respectively with the interface board storage unit 1511 in the interface board 1611, the main control board multicast processing unit 1621 and the intelligent decision device 1603, is adapted to execute a corresponding multicast process on an IGMP message sent from a user. For example:

When the interface board 1601 receives an IGMP message sent from a user for selecting a multicast channel, it is determined whether the multicast flow as requested for by the user is present on the interface board according to a multicast maintained multicast group recorded in the interface board storage unit 1511. If the multicast flow as requested for by the user is present on the interface board 1601, the interface board multicast processing unit 1613 instructs the interface board multicast duplication unit 1512 to duplicate the multicast flow of the multicast channel to a user port according to the multicast group corresponding to the multicast channel recorded in the interface board storage unit 1511; and if the multicast flow as requested for by the user is absent on the interface board 1601, the interface board multicast processing unit 1613 instructs the interface board storage unit 1511 to add the multicast flow of the multicast channel in an interface board multicast forwarding table, and forwards the user IGMP message to a main control board multicast processing unit 1621 and requests the main control board multicast processing unit 1621 for the multicast flow of the multicast channel requesting to join for by the user.

The interface board storage unit 1511 connected respectively with the interface board multicast processing unit 1613 and the interface board multicast duplication unit 1512 and controlled by the interface board multicast processing unit 1613 is adapted to record a multicast group of the user corresponding to the multicast channels.

The interface board multicast duplication unit 1512 is connected and functions as in the embodiment illustrated in figure 15.

The main control board 1602 is different from the embodiment illustrated as figure 15 in the main control board multicast processing unit 1621, which in this embodiment is connected respectively with the main control board storage unit 1522, the interface board multicasting processing unit 1512 and the intelligent decision device 1603, and adapted to receive a multicast flow request sent from the interface board multicast processing unit 1613 and perform multicast process in response to the request.

As can be seen from above, because the interface board multicast processing unit 1613 is added in each interface board of the access device, the multicast process originally centralized on the main control board can be distributed to the respective interface boards and the main control board for the purpose of a coordinated process. With use of the multicast distributed process, the main control board only processes the first request without any repetitive process when a plurality of users join the same program source over the interface board, and the access device according to the embodiment of the invention can make full use of process power of the system and improve greatly multicast process ability of the access device.

Furthermore, due to the multicast distributed process mode, the interface boards can configure the multicast forwarding table on the interface board by themselves according to the received user IGMP message instead of that the main control board generates the multicast forwarding table from the user IGMP message forwarded from the interface board and distributes the multicast forwarding table to the interface boards. It is sufficient for the main control board to configure its own multicast forwarding table according to the IGMP message forwarded thereto from the interface board. Apparently, the method according to the embodiment of the invention can save communication in the access device, which is advantageous to improve a process speed.

Furthermore, if the multicast channel as requested for by the user is a channel in the interface board 1601 with a relatively high selection frequency, the interface board 1601 can push directly the arriving user IGMP request to the user port of the requesting user without submittal thereof to the main control board 1602 for processing, thereby further reducing a delay of the multicast process and improving an efficiency of the multicast process.

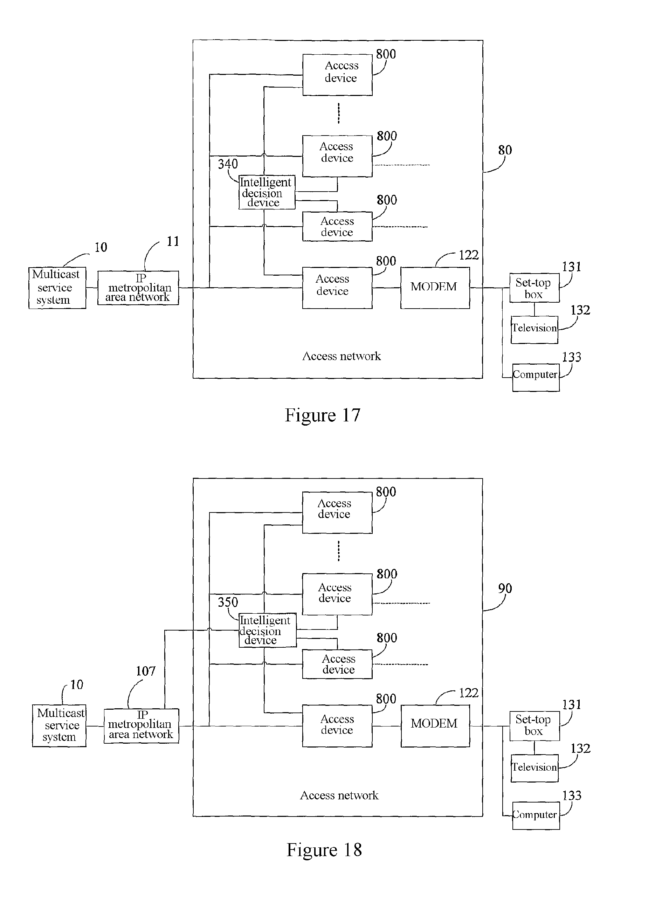

Refer to figure 17, which is a structural diagram of the second embodiment of the multicast processing system according to the invention. As illustrated, the embodiment makes an intelligent decision device 340 applicable throughout an access network, and the intelligent decision device 340 connected respectively with each of access devices 800 (an access device in the prior art, the access device 150 illustrated in Figure 15 or the access device 160 illustrated in Figure 16) in the access network 80, particularly with a main control board multicast processing unit of the access device 800, is adapted to instruct the main control board multicast processing unit to make a statistic of the time when users join or quit respective multicast group channels in each interface board in a main control board and a statistic of user selection frequencies or frequency weights and temporal distributions of the frequencies or frequency weights in each interface board, to obtain several program frequencies in all access devices 800 in the access network 80 with the highest selection frequency, the largest frequency weight or the longest usage time over a relatively long period as user frequently selected multicast channels, and to further select specific access devices with a relatively high selection frequency, a relatively large frequency weight or the longest usage time in the corresponding access devices 800 of the user frequently selected multicast channels as frequently selected access devices of the user frequently selected multicast channels.

The intelligent decision device 340 is adapted to create a reference table of the frequently selected multicast channels and the frequently selected access devices 800 of the frequently selected multicast channels according to the above obtained result and to instruct, according to the reference table, the main control board multicast processing unit of the frequently selected access device in the reference table to send to the network side a request for adding multicast flows of the frequently selected channels with a relatively high selection frequency the access device.

As can be seen from above, due to addition of the intelligent decision device 340 in the access network system, the intelligent decision device 340 enables the access device 800 in the access network 80 to obtain in advance the multicast flows corresponding to the frequently selected channels with a relatively usage frequency in the device, which is advantageous to improve an efficiency of the multicast process in the multicast process network.

Refer to Figure 18, which is a structural diagram of the third embodiment of the multicast processing system according to the invention, and as illustrated, the embodiment is different from that illustrated in Figure 17 in that the intelligent decision device 350 connected respectively with respective access devices 800 in the access network 90 is further connected with the IP MAN 107 and adapted to create a reference table between frequently selected multicast channels and the access devices 800 with a relatively high usage frequency of the frequently selected multicast channels in the IP MAN 107 after obtaining the frequently selected multicast channels of the access network and the access devices with a relatively high usage frequency of the frequently selected multicast channels, so that the IP MAN 107 can push multicast flows of the corresponding multicast channels to the access devices 800 in the reference table according to the reference table.

As can be seen from above, because the IP MAN 107 can push and send the multicast flows of the frequently selected program frequencies in the access system in the embodiment, thereby further reducing time delay of multicast request processing and improving efficiency of multicast process.

The descriptions above are just exemplary embodiments of the present invention and it should be noted that those skilled in the art can make various modifications and variations without departing from the scope of the invention and that the modifications and variations shall also be taken as part of the scope of the invention.

## Claims

1. A multicast service processing method, comprising:
receiving, by an access device, a multicast program request message from a terminal device;
inquiring and obtaining a program rating parameter according to the multicast program request message;
generating multicast program data according to the program rating parameter; and
sending the multicast program data to the terminal device.

2. The method according to claim 1, further comprising:
authenticating the terminal device, by the access device upon receiving the multicast program request message from the terminal device, and performing the step of inquiring and obtaining the program rating parameter according to the multicast program request message if the authentication is passed.

3. The method according to claim 1, wherein the multicast program rating parameter comprises a multicast group IP address and a multicast program rated priority.

4. The method according to any one of claims 1 to 3, wherein the sending the multicast program data to the terminal device comprises:
sending the multicast program data according to a preset control policy comprising: preferentially putting a multicast program of a lower rated priority offline; and/or preferentially putting a multicast program of a higher rated priority offline; and/or the maximum number of multicast programs concurrently online at the terminal device when the rated priority is above a preset threshold; and/or the maximum number of multicast programs concurrently online at the terminal device when the rated priority is below a preset threshold.

5. An access device, comprising an IGMP message processing unit and a router joining and quitting message unit, wherein the access device further comprises:
a multicast program management unit, adapted to configure and manage a rating form and a rated priority of a multicast program, generate multicast program data according to the rating form and the rated priority after the IGMP message processing unit receives a multicast program request message of a terminal device, and send the multicast program data to the router joining and quitting message unit.

6. The access device according to claim 5, further comprising:
a terminal device identification/authentication and channel status management unit, adapted to check the validity of the terminal device, and determine according to the rated priority of a multicast program selected by the terminal device a control policy for the router joining and quitting message unit to forward the multicast program data.

7. The access device according to claim 5, further comprising: an authentication unit, adapted to authenticate the terminal device according to the multicast program request message received by the IGMP message processing unit.

8. The access device according to claim 5, further comprising: a channel status management unit, adapted to determine, according to the rated priority of a multicast program selected by the terminal device, a control policy for the router joining and quitting message unit to forward the multicast program data.

9. A multicast service processing method, comprising:
acquiring multicast program audience rating statistical information;
determining a multicast program priority according to the audience rating statistical information, and setting the priority at an access device;
performing, by the access device, differential processing of a multicast program according to the multicast program priority.

10. The method according to claim 9, wherein the acquiring multicast program audience rating statistical information comprises:
acquiring, by the access device, user multicast behavioral information; and
acquiring the multicast program audience rating statistical information according to the user multicast behavioral information.

11. The method according to claim 10, wherein the access device acquires the user multicast behavioral information according to a received multicast program request message of a terminal device.

12. The method according to claim 9, wherein the performing differential processing of a multicast program according to the multicast program priority comprises:
reserving bandwidth for the program, and/or statically forwarding the program to the access device, and/or guaranteeing quality of the program according to 802.1p information, and/or reserving multicast resource for the program, and/or preferentially sending IGMP protocol in a concurrent situation.

13. The method according to claim 9, wherein the determining a multicast program priority according to the audience rating statistical information comprises:
performing high-order curve fitting, weighted arithmetic averaging or least square root processing on the statistical information, to determine the multicast program priority.

14. The method according to claim 9, further comprising: refreshing multicast program priority configuration in the access device periodically or in real time.

15. An access device, comprising:
an IGMP message processing unit, adapted to receive a message comprising a multicast program request message from a terminal device;
a router joining and quitting message unit, adapted to send a multicast program to the terminal device;
further comprising:
an audience rating statistic unit, adapted to acquire multicast program audience rating statistical information;
a multicast program priority determination unit, adapted to determine a multicast program priority according to the audience rating statistical information; and
a multicast program processing unit, adapted to perform differential processing of a multicast program requested for by the terminal device according to the multicast program priority, and send the processed multicast program to the router joining and quitting message unit.

16. The access device according to claim 15, further comprising:
a multicast behavioral information acquisition unit, adapted to acquire user multicast behavioral information according to the multicast program request message; and
the audience rating statistic unit adapted to acquire the multicast program audience rating statistical information according to the user multicast behavioral information.

17. The access device according to claim 15, wherein the multicast program processing unit comprises:
a bandwidth reservation sub-unit, adapted to reserve bandwidth for the multicast program; and/or
a statically forwarding sub-unit, adapted to statically forward the multicast program to the access device; and/or
a quality guarantee sub-unit, adapted to guarantee program quality of the multicast program according to 802.1p information; and/or
a multicast resource reservation sub-unit, adapted to reserve multicast resource for the multicast program; and/or
a concurrent processing sub-unit, adapted to preferentially insert the multicast program to head of a buffer queue in the case of a plurality of concurrent processes while storing the multicast program to the head of the buffer queue.

18. A multicast service processing system, comprising an access device and a policy server, the access device comprising a multicast behavioral information acquisition unit, a sender unit and a multicast program processing unit; the policy server comprising an audience rating statistic unit, a multicast program priority determination unit and a configuration unit; wherein
the multicast behavioral information acquisition unit is adapted to acquire user multicast behavioral information according to a multicast program request message of a terminal device received by the access device;
the sender unit is adapted to send the user multicast behavioral information to the policy server;
the audience rating statistic unit is adapted to acquire multicast program audience rating statistical information according to the user multicast behavioral information;
the multicast program priority determination unit is adapted to determine a multicast program priority according to the audience rating information;
the configuration unit is adapted to configure the access device with the multicast program priority; and
the multicast program processing unit is adapted to perform differential processing of a multicast program requested for by the terminal device according to the multicast program priority.

19. The system according to claim 18, wherein the policy server further comprises: a timer, adapted to periodically instruct the configuration unit to send multicast program priority configuration information to the access device.

20. A multicast service processing method, comprising:
determining whether a multicast channel requesting to join is permitted to be added at a current service port upon receiving a joining message of the multicast channel;
if it is permitted, forwarding the multicast channel requesting to join;
otherwise checking among channels being forwarded at the service port that whether there is a multicast channel which receives no response after requesting to quit and before a specific group query response time expires, if there is, stopping forwarding the multicast channel requesting to quit, and forwarding the multicast channel requesting to join; otherwise rejecting joining of the multicast channel.

21. The method according to claim 20, wherein the step of stopping forwarding a multicast channels requesting to quit comprises:
stopping forwarding of the multicast channel requesting to quit whose response time is the first to expire.

22. The method according to claim 20, further comprising:
setting a status of the multicast channel, which receives no response after requesting to quit and before a specific group query response time expires, to ready-to-quit, upon receiving a multicast channel quitting message; and
the step of checking among channels being forwarded at the service port that whether there is a multicast channel which receives no response after requesting to quit and before a specific group query response time expires comprises: checking among channels being forwarded whether there is a multicast channel is in ready-to-quit status.

23. The method according to claim 20, wherein the step of determining whether a multicast channel requesting to join is permitted to be added at a current service port upon receiving a joining message of the multicast channel comprises:
determining whether the multicast channel requesting to join is a multicast channel being forwarded, and if it is, permitting joining of the multicast channel requesting to join;
otherwise determining whether a new multicast channel is permitted to be added at the current port, and if it is, permitting joining of the multicast channel requesting to join, otherwise, rejecting joining of the multicast channel requesting to join.

24. The method according to claim 23, wherein the step of determining whether a new multicast channel is permitted to be added at the current port comprises:
determining whether the number of multicast channels being forwarded at the service port is below the number of multicast channels permitted to be added the service port, and if so, permitting joining of a new multicast channel; otherwise rejecting joining of a new multicast channel.

25. An access device, comprising a channel quitting processing unit and a channel joining processing unit, wherein:
the channel quitting processing unit is adapted to send to a service port receiving a multicast channel which requests to quit, a specific group query message of the multicast channel, after the access device receives a quitting message of the multicast channel, and strop forwarding the multicast channel which requests to quit after a specific group query response time expires;
the channel joining processing unit comprises a multicast forwarding unit, a first control unit and a second control unit, wherein
the multicast forwarding unit is adapted to control multicast channel forwarding;
the first control unit is adapted to determine whether a multicast channel requesting to join is permitted to join at a current service port after the access device receives a joining message of the multicast channel, and if it is permitted, instructing the multicast forwarding unit to forward the multicast channel requesting to join; otherwise handing over to the second control unit;
the second control unit is adapted to check among channels being forwarded that whether there is a multicast channel which receives no response after requesting to quit before a specific group query response time expires, if there is, instructing the multicast forwarding unit to stop forwarding a multicast channel requesting to quit and forward the multicast channel requesting to join; otherwise rejecting joining of the multicast channel.

26. The access device according to claim 25, wherein the step of the second control unit stopping forwarding a multicast channel requesting to quit comprises stopping forwarding a multicast channel whose response time is the first to expire.

27. The access device according to claim 25, wherein:
the channel quitting processing unit further comprises a status configuration unit, adapted to set a status of a multicast channel which receives no response after requesting to quit and before the specific group query response time expires;
the step of the second control unit checking whether there is a multicast channel which receives no response after requesting to quit before a specific group query response time expires comprises: checking whether there is a multicast channel in ready-to-quit status.

28. The access device according to claim 26, wherein the first control unit comprises:
a first determination unit, adapted to determine whether the multicast channel requesting to join is a multicast channel being forwarded, and if so, permitting joining of the multicast channel requesting to join; otherwise informing the second determination unit to determine; and
the second determination unit, adapted to determine whether a new multicast channel is permitted to be added at a current port, and if so, permitting joining of the multicast channel requesting to join; otherwise rejecting joining of the multicast channel requesting to join.

29. A multicast service processing method, comprising:
acquiring, by an access device, a user frequently selected multicast channel;
creating a multicast group of user frequently selected multicast channels in a multicast forwarding table of a main control board of the access device; and
requesting, by the main control board, according to the multicast group, the network side to send multicast flow of the user frequently selected multicast channel.

30. The method according to claim 29, wherein the user frequently selected multicast channel is a user frequently selected multicast channel in the access device, and the step of acquiring the user frequently selected multicast channels comprises:
acquiring statistics of selection frequencies or frequency weights of channels in respective interface boards, and temporal distributions of the frequencies or frequency weights according to user multicast behavior in the interface boards of the access device, the frequency weights being selected dependent on bandwidths of the channels;
selecting a channel with a high frequency, or a large frequency weight, or a wide temporal distributions of the frequencies or frequency weights, as the user frequently selected multicast channel of the access device, according to the statistics.

31. The method according to claim 30, after the step of acquiring the user frequently selected multicast channel in the access device, the method further comprises:
acquiring an interface board of the user frequently selected multicast channel with the high selection frequency, or the large frequency weight or the wide temporal distributions of the selection frequencies or frequency weights, as a user frequently selected interface board of the user frequently selected multicast channel;
adding the frequently selected interface board in a multicast group of the user frequently selected multicast channels in the main control board multicast forwarding table; and
duplicating, by the main control board, multicast flow of the user frequently selected multicast channel according to the multicast group.

32. The method according to claim 29, wherein the user frequently selected multicast channel is a user frequently selected multicast channel in an access network, and the step of acquiring statistics of the user frequently selected multicast channel comprises:
acquiring statistics of selection frequencies or frequency weights and temporal distributions of the frequencies or frequency weights of channels in respective interface boards in each access device in the access network according to user multicast behavior in the interface boards, wherein the frequency weights are selected dependent on bandwidths of the channels;
selecting a channel with a high frequency, a large frequency weight or a wide temporal distribution, as the user frequently selected multicast channel in the access network according to the statistics, and selecting an access devices with a high frequency, a large frequency weight or a wide temporal distribution of the user frequently selected multicast channel in the access network, as a frequently selected access devices of the user frequently selected multicast channel according to the statistical result.

33. The method according to claim 32, further comprising:
creating, in an IP metropolitan area network, a list of the frequently selected access devices in the access network corresponding to the user frequently selected multicast channel; and
pushing, by the network side of the IP metropolitan area network, multicast flow of the user frequently selected multicast channel in the access network to the access devices in the list according to the list of the frequently selected access devices.

34. The method according to any one of claims 29 to 33, further comprising:
receiving, by an interface board, a joining request of a user;
determining whether multicast flow as requested for by the user is present on the interface board according to multicast group information recorded in the interface; and
if it is not, requesting the main control board for the multicast flow;
if it is, pushing, by the interface board, the multicast flow to the user according to the joining request.

35. A multicast service processing system, comprising an IP metropolitan area network and an access network, the access network comprising an access device, the access device comprising a main control board and at least one interface board connected with the main control board, wherein
the main control board comprises a main control board multicast processing unit, a main control board storage unit adapted to store a main control board multicast forwarding table and a main control board multicast duplication unit; and
the interface board comprises an interface board storage unit adapted to store an interface board multicast forwarding table and an interface board multicast duplication unit adapted to duplicate multicast flow to a user port;
the multicast service processing system further comprising:
an intelligent decision device connected with the main control board multicast processing unit of the access device, adapted to acquire a user frequently selected multicast channel.

36. The system according to claim 35, wherein the intelligent decision device is located in the access device and adapted to acquire a user frequently selected multicast channel in the access device according to multicast group information recorded in the main control board multicast processing unit and to instruct the main control board multicast processing unit to acquire multicast flow of the user frequently selected multicast channel.

37. The system according to claim 35, wherein the interface board further comprises:
an interface board processing unit, connected respectively with the main control board multicast processing unit and the interface board storage unit, adapted to process an user IGMP message and to maintain the interface board multicast forwarding table according to the IGMP message; and
the intelligent decision device located in the access device and connected respectively with the interface board multicast processing unit and the main control board multicast processing unit, adapted to acquire a frequently selected multicast channel of the access device according to multicast group information recorded in the interface board multicast processing unit and to instruct the main control board multicast processing unit to request the network side to distribute multicast flow of the frequently selected multicast channel.

38. The system according to claim 35, wherein the intelligent decision device is located outside the access device and connected respectively respective access devices in the access network, and is adapted to acquire a frequently selected multicast channel in the access network and a frequently selected access device of the frequently selected multicast channel according to multicast group information recorded in the main control board multicast processing unit of the access device and to instruct the main control board multicast processing unit of the frequently selected access device to request the access network to distribute multicast flow of the frequently selected multicast channel.

39. The system according to claim 38, wherein the intelligent decision device is further connected with the IP metropolitan area network, and is adapted to instruct the IP metropolitan area network to push the multicast flow of the frequently selected multicast channel in the access network to the frequently selected access device.

40. The system according to claim 39, wherein the IP metropolitan area network side is further adapted to comprise a reference table indicating correspondence relationship between the frequently selected multicast channel of the access network and the frequently selected access device.

41. An access device, comprising a main control board and at least one interface board connected with the main control board, wherein
the main control board comprises a main control board multicast processing unit, a main control board storage unit adapted to store a main control board multicast forwarding table and a main control board multicast duplication unit; and
the interface board comprises an interface board storage unit adapted to store an interface board multicast forwarding table and an interface board multicast duplication unit adapted to duplicate multicast flow to a user port,
the access device further comprising:
an intelligent decision device connected with the main control board multicast processing unit, adapted to acquire a user frequently selected multicast channel according to multicast group information kept by the main control board multicast processing unit, and instruct the main control board multicast processing unit to acquire multicast flow of the user frequently selected multicast channel.

42. The access device according to claim 41, wherein the interface board further comprises:
an interface board processing unit connected respectively with the main control board multicast processing unit and the interface board storage unit, adapted to process an user IGMP message and to maintain the interface board multicast forwarding table according to the IGMP message; and
the intelligent decision device connected respectively with the interface board multicast processing unit and the main control board multicast processing unit, adapted to acquire the frequently selected multicast channel of the access device according to multicast group information recorded in the interface board multicast processing unit and to instruct the main control board multicast processing unit to request the network side to distribute the multicast flow of the frequently selected multicast channel.
